# EUROPÄISCHE PATENTANMELDUNG

(11) **EP 4 792 949 A1**
(43) Veröffentlichungstag der Anmeldung: **19.08.2026**
(21) Anmeldenummer: 25157579.1
(22) Anmeldetag: 13.02.2025
(51) Int. Cl.: B21D 9/12, B21C 1/34, B21D 11/06, B21D 11/10, B21D 11/22, B21D 43/00, B21D 53/06, F28D 7/02, B21D 53/02, B23P 15/26, B23P 23/06, F28F 9/013

(54) **WICKELANLAGE**

(71) Anmelder: Linde GmbH, 82049 Pullach (DE)
(72) Erfinder: Stöckl, Joachim, 82049 Pullach (DE); Drese, Günther, 82049 Pullach (DE); Hammerdinger, Markus, 82049 Pullach (DE)
(74) Vertreter: Meilinger, Claudia Sabine

(57) **Zusammenfassung**

Eine Wickelanlage (100) zum Wickeln eines Rohrbündels (4) eines gewickelten Wärmeübertragers (1), mit einer Behälterdrehvorrichtung (101) zum Drehen eines Kernrohrs (6) oder eines bereits teilweise gewickelten Rohrbündels (4') um eine Mittelachse (2) desselben, und einer Wickelvorrichtung (107) zum zeitgleichen Wickeln von zumindest zwei Wärmeübertragerrohren (5, 5A, 5B, 5C) auf das Kernrohr (6) oder auf das bereits teilweise gewickelte Rohrbündel (4'), wobei die Wickelvorrichtung (107) einen Wickelkopf (131, 131') aufweist, der dazu eingerichtet ist, die Wärmeübertragerrohre (5, 5A, 5B, 5C) derart voneinander beabstandet anzuordnen, dass zwischen zwei benachbarten Wärmeübertragerrohren (5, 5A, 5B, 5C) jeweils eine Lücke (36) angeordnet ist, in der ein weiteres Wärmeübertragerrohr (5, 5A, 5B, 5C) aufnehmbar ist.

## Beschreibung

Die Erfindung betrifft eine Wickelanlage zum Wickeln eines Rohrbündels eines gewickelten Wärmeübertragers.

Gewickelte Wärmeübertrager weisen ein Kernrohr auf, auf das in einer Vielzahl von Rohrlagen Wärmeübertragerrohre gewickelt werden, um ein Rohrbündel des Wärmeübertragers zu bilden. Die Wärmeübertragerrohre können einzeln und zeitlich aufeinanderfolgend auf das Kernrohr oder auf bereits vorhandene Rohrlagen gewickelt werden. Für diesen Wickelvorgang kann eine Wickelanlage eingesetzt werden, die einen Fahrwagen mit einem Coil oder einer Rohrspule des Wärmeübertragerrohrs trägt. Das Kernrohr wird um eine Mittelachse desselben in Rotation versetzt und der Fahrwagen verfährt entlang der Mittelachse, um das Wärmeübertragerrohr schraubenförmig zu wickeln. Nach einer Befestigung des Wärmeübertragerrohrs an dem Kernrohr oder an einer schon vorhandenen Rohrlage, wird ein weiteres Wärmeübertragerrohr gewickelt, bis eine Rohrlage fertiggestellt ist. Anschließend folgt die nächste Rohrlage.

In der Regel weisen diese Wärmeübertragerrohre eine Länge von 70 bis 150 Meter auf. Auf einer Rohrspule können beispielsweise 4.000 Meter eines derartigen Wärmeübertragerrohrs vorrätig sein. Ein Wärmeübertragerrohr aufzubringen, also mit dem Fahrwagen von einem Ende zu dem anderen Ende des Kernrohrs zu fahren, dauert je nach Länge des jeweiligen Wärmeübertragerrohrs etwa 4 bis 5 Minuten. Dies führt dazu, dass der Wickelvorgang zum Herstellen des Rohrbündels sehr zeitaufwändig und damit auch kostenintensiv ist.

Vor diesem Hintergrund besteht eine Aufgabe der vorliegenden Erfindung darin, eine verbesserte Wickelanlage zur Verfügung zu stellen.

Demgemäß wird eine Wickelanlage zum Wickeln eines Rohrbündels eines gewickelten Wärmeübertragers vorgeschlagen. Die Wickelanlage umfasst eine Behälterdrehvorrichtung zum Drehen eines Kernrohrs oder eines bereits teilweise gewickelten Rohrbündels um eine Mittelachse desselben und eine Wickelvorrichtung zum zeitgleichen Wickeln von zumindest zwei Wärmeübertragerrohren auf das Kernrohr oder auf das bereits teilweise gewickelte Rohrbündel, wobei die Wickelvorrichtung einen Wickelkopf aufweist, der dazu eingerichtet ist, die Wärmeübertragerrohre derart voneinander beabstandet anzuordnen, dass zwischen zwei benachbarten Wärmeübertragerrohren jeweils eine Lücke angeordnet ist, in der ein weiteres Wärmeübertragerrohr aufnehmbar ist.

Dadurch, dass der Wickelkopf die Wärmeübertragerrohre voneinander beabstandet positioniert oder anordnet, ist es möglich, in einem ersten Schritt mehrere erste Wärmeübertragerrohre zeitgleich auf das Kernrohr oder auf das bereits teilweise gewickelte Rohrbündel zu wickeln und anschließend in einem zweiten Schritt zeitgleich mehrere zweite Wärmeübertragerrohre in die mit Hilfe des Wickelkopfs zwischen den ersten Wärmeübertragerrohren gebildeten Lücken zu wickeln. Aufgrund des jeweiligen zeitgleichen Wickelns mehrerer erster Wärmeübertragerrohre sowie mehrerer zweiter Wärmeübertragerrohre lässt sich beim Wickeln des Rohrbündels eine signifikante Zeitersparnis erzielen.

Der Wärmeübertrager kann auch als Wärmetauscher bezeichnet werden. Insbesondere ist der Wärmeübertrager ein Rohrbündelwärmetauscher und kann daher auch als solcher bezeichnet werden. Der Wärmeübertrager ist im Wesentlichen rotationssymmetrisch zu der Mittelachse aufgebaut. Der Wärmeübertrager weist das Kernrohr auf, auf welches das Rohrbündel gewickelt wird. Das Rohrbündel umfasst eine Vielzahl von Rohrlagen, welche schichtweise auf das Kernrohr gewickelt sind. Das Rohrbündel wird somit von mehreren Rohrlagen gebildet. Die Wärmeübertragerrohre sind schraubenförmig oder spiralförmig um die Mittelachse gewunden. Zwischen dem Kernrohr und einer ersten Rohrlage sind Stege angeordnet, die gleichmäßig um die Mittelachse herum verteilt angeordnet sind. Die Stege können mit dem Kernrohr verschweißt sein. Zwischen den Rohrlagen sind ebenfalls Stege angeordnet. Die Stege können mit den Rohrlagen verschweißt werden. Die Stege fungieren als Abstandhalter. Jeder Steg weist eine Vielzahl von Ausnehmungen auf, in welche die Wärmeübertragerrohre gewickelt werden. Die Wärmeübertragerrohre können beispielsweise Edelstahlrohre oder Aluminiumrohre sein.

Unter einem "bereits teilweise gewickelten" Rohrbündel ist vorliegend ein Rohrbündel zu verstehen, welches noch nicht vollständig gewickelt ist. Das bereits teilweise gewickelte Rohrbündel wird durch ein Aufbringen von weiteren Rohrlagen zu dem fertigen Rohrbündel. Die zuvor erwähnten ersten Wärmeübertragerrohre unterscheiden sich von den zuvor erwähnten zweiten Wärmeübertragerrohren nur dadurch, dass die ersten Wärmeübertragerrohre zeitlich vor den zweiten Wärmeübertragerrohren gewickelt werden. Ansonsten sind die ersten Wärmeübertragerrohre und die zweiten Wärmeübertragerrohre baugleich. "Baugleich" schließt vorliegend nicht aus, dass ersten Wärmeübertragerrohre und die zweiten Wärmeübertragerrohre unterschiedliche Längen aufweisen. Es werden zumindest zwei erste Wärmeübertragerrohre zeitgleich auf das Kernrohr oder das bereits teilweise gewickelte Rohrbündel gewickelt. Demgemäß werden auch zumindest zwei zweite Wärmeübertragerrohre zeitgleich auf das Kernrohr oder das bereits teilweise gewickelte Rohrbündel gewickelt. Es können jedoch auch drei, vier, fünf oder mehr als fünf erste Wärmeübertragerrohre oder zweite Wärmeübertragerrohre zeitgleich gewickelt werden.

Die Behälterdrehvorrichtung ist insbesondere dazu geeignet, das Kernrohr oder das bereits teilweise gewickelte Rohrbündel derart zu tragen, dass die Mittelachse horizontal angeordnet ist. Mit Hilfe der Behälterdrehvorrichtung kann das Kernrohr oder das bereits teilweise gewickelte Rohrbündel um die Mittelachse mit einer definierten Winkelgeschwindigkeit oder Rotationsgeschwindigkeit gedreht werden. Die Behälterdrehvorrichtung umfasst insbesondere einen Drehgeber, mit dessen Hilfe eine Winkelposition des Kernrohrs oder des bereits teilweise gewickelten Rohrbündels stets erfasst werden kann. Die Rotationsgeschwindigkeit der Behälterdrehvorrichtung kann beliebig verändert werden. Mit anderen Worten kann das Kernrohr oder das bereits teilweise gewickelte Rohrbündel je nach Bedarf schneller oder langsamer gedreht werden.

Mit Hilfe der Wickelvorrichtung werden die Wärmeübertragerrohre dem Kernrohr oder dem bereits gewickelten Rohrbündel zugeführt und auf dieses gewickelt. Die Wärmeübertragerrohre werden dabei von der Wickelvorrichtung jedoch nicht aktiv zugeführt, sondern mit Hilfe der Behälterdrehvorrichtung von der Wickelvorrichtung abgezogen. Die Wickelvorrichtung ist dazu eingerichtet, dem Wickelkopf zeitgleich mehrere, insbesondere zumindest zwei, Wärmeübertragerrohre, insbesondere mehrere erste Wärmeübertragerrohre oder mehrere zweite Wärmeübertragerrohre, zur Verfügung zu stellen. Beispielsweise kann die Wickelvorrichtung zwei, drei, vier, fünf oder mehr als fünf Wärmeübertragerrohre zeitgleich bereitstellen, welche dann auch zeitgleich auf das Kernrohr oder auf das bereits teilweise gewickelte Rohrbündel gewickelt werden, um jeweils eine Rohrlage zu bilden.

Der Wickelkopf dient dazu, die Wärmeübertragerrohre derart voneinander zu beabstanden, dass zwischen zwei benachbarten Wärmeübertragerrohren zumindest ein Abstand vorhanden ist, welcher mindestens einem jeweiligen Außendurchmesser der Wärmeübertragerrohre entspricht. Dieser vorgenannte Abstand entspricht der Lücke zwischen zwei, insbesondere ersten, Wärmeübertragerrohren, in welche das weitere, insbesondere zweite, Wärmeübertragerrohr gewickelt wird. Es sind somit insbesondere immer ein, insbesondere erstes, Wärmeübertragerrohr und eine Lücke abwechselnd angeordnet. Vorzugsweise klemmt der Wickelkopf die Wärmeübertragerrohre, so dass diese nur durch das Aufbringen einer Zugkraft aus dem Wickelkopf herausgezogen oder von diesem abgezogen werden können.

Gemäß einer Ausführungsform weist der Wickelkopf ein Wickelkopfunterteil mit einer Vielzahl von unteren Führungsrollen und ein Wickelkopfoberteil mit einer Vielzahl von oberen Führungsrollen auf, zwischen denen die Wärmeübertragerrohre anordenbar sind.

Mit anderen Worten sind die Wärmeübertragerrohre im Betrieb der Wickelanlage zwischen den unteren Führungsrollen und den oberen Führungsrollen platziert. Das Wickelkopfunterteil und das Wickelkopfoberteil können beispielsweise jeweils kastenförmig sein. Insbesondere sind das Wickelkopfunterteil und das Wickelkopfoberteil jeweils gehäuseförmig. Das Wickelkopfunterteil kann die unteren Führungsrollen aufnehmen oder umschließen. Demgemäß kann das Wickelkopfoberteil die oberen Führungsrollen aufnehmen oder umschließen. Das Wickelkopfoberteil kann insbesondere gegenüber dem Wickelkopfunterteil verlagert oder bewegt werden, um die Wärmeübertragerrohre in den Wickelkopf einlegen zu können. Insbesondere kann das Wickelkopfoberteil von dem Wickelkopfunterteil getrennt werden. Dies kann beispielsweise mit Hilfe einer Schraubverbindung erfolgen. Alternativ kann das Wickelkopfoberteil auch mit Hilfe eines Scharniers an dem Wickelkopfunterteil angeschlagen sein. Der Wickelkopf kann hierdurch geöffnet werden, um die Wärmeübertragerrohre in den Wickelkopf einzulegen. Anschließend wird der Wickelkopf geschlossen, und die Wärmeübertragerrohre sind in dem Wickelkopf geklemmt. Die unteren Führungsrollen sind drehbar in dem Wickelkopfunterteil gelagert. Die oberen Führungsrollen sind drehbar in dem Wickelkopfoberteil gelagert. Eine Anzahl der unteren Führungsrollen und eine Anzahl der oberen Führungsrollen ist beliebig. Beispielsweise kann die Anzahl der unteren Führungsrollen und die Anzahl der oberen Führungsrollen gleich sein. Dies ist jedoch nicht zwingend erforderlich. Beispielsweise können drei untere Führungsrollen und drei obere Führungsrollen vorgesehen sein.

Gemäß einer weiteren Ausführungsform sind die unteren Führungsrollen und die oberen Führungsrollen derart zueinander versetzt angeordnet, dass zwischen zwei unteren Führungsrollen eine obere Führungsrolle und umgekehrt angeordnet ist.

Insbesondere sind die unteren Führungsrollen und die oberen Führungsrollen entlang einer Abzugsrichtung, entlang der die Wärmeübertragerrohre im Betrieb der Wickelanlage aus dem Wickelkopf abgezogen werden, zueinander versetzt angeordnet. Die Abzugsrichtung ist dabei von dem Wickelkopf in Richtung der Mittelachse orientiert. Insbesondere ist immer zwischen zwei unteren Führungsrollen eine obere Führungsrolle und zwischen zwei oberen Führungsrollen eine untere Führungsrolle angeordnet.

Gemäß einer weiteren Ausführungsform weisen die unteren Führungsrollen und die oberen Führungsrollen jeweils Führungsnuten zum Führen der Wärmeübertragerrohre auf, wobei die Führungsnuten derart voneinander beabstandet angeordnet sind, dass bei dem Führen der Wärmeübertragerrohre zwischen zwei benachbarten Wärmeübertragerrohren jeweils eine Lücke angeordnet ist, in der ein weiteres Wärmeübertragerrohr aufnehmbar ist.

Die Führungsnuten sind demgemäß um eine Breite der Lücke oder um einen Außendurchmesser der Wärmeübertragerrohre voneinander beabstandet angeordnet. Im Betrieb der Wickelanlage ist es auch möglich, dass jeweils nur jede zweite Führungsnut mit einem Wärmeübertragerrohr belegt wird. In diesem Fall kann jede zweite Führungsnut von einer benachbarten zweiten Führungsnut um die Breite der Lücke oder um den Außendurchmesser der Wärmeübertragerrohre von der nächsten zweiten Führungsnut beabstandet angeordnet sein. Die Führungsnuten sind insbesondere jeweils um die Führungsrollen umlaufende Ringnuten. Eine Anzahl der Führungsnuten entspricht zumindest einer Anzahl der zeitgleich zu wickelnden Wärmeübertragerrohre. Es können jedoch auch mehr Führungsnuten vorgesehen sein. In diesem Fall ist es beispielsweise möglich, nur jede zweite Führungsnut mit einem Wärmeübertragerrohr zu belegen.

Gemäß einer weiteren Ausführungsform ist das Wickelkopfoberteil mit Hilfe eines Scharniers verschwenkbar an dem Wickelkopfunterteil montiert, wobei das Wickelkopfoberteil mit Hilfe eines Verschlusses an dem Wickelkopfunterteil arretierbar ist.

Zum Beschicken des Wickelkopfs mit den Wärmeübertragerrohren kann der Wickelkopf demgemäß geöffnet und geschlossen werden, indem das Wickelkopfoberteil gegenüber dem Wickelkopfunterteil verschwenkt wird. Es können mehrere Verschlüsse vorgesehen sein. Insbesondere können zwei Verschlüsse vorgesehen sein. Beispielsweise sind die Verschlüsse Schnellverschlüsse, welche ein schnelles Öffnen und Schließen des Wickelkopfs ermöglichen. Alternativ ist auch eine Schraubverbindung zwischen dem Wickelkopfunterteil und dem Wickelkopfoberteil möglich.

Gemäß einer weiteren Ausführungsform ist der Wickelkopf mit Hilfe eines Federelements dazu eingerichtet, die Wärmeübertragerrohre bei dem Wickeln des Rohrbündels gegenüber dem Kernrohr oder dem bereits teilweise gewickelten Rohrbündel vorzuspannen.

Der Wickelkopf kann mehrere Federelemente aufweisen. Beispielsweise kann der Wickelkopf zwei Federelemente aufweisen, welche beidseits des Wickelkopfunterteils platziert sind. Die Federelemente können beispielsweise Druckfedern sein. Werden die Wärmeübertragerrohre aus dem Wickelkopf abgezogen, so erfolgt dies gegen eine Federkraft des Federelements, welches beispielsweise zusammengedrückt oder komprimiert wird. Durch die Vorspannung der Wärmeübertragerrohre ist stets gewährleistet, dass diese an dem Kernrohr oder an dem bereits teilweise gewickelten Rohrbündel anliegen, wenn die Wärmeübertragerrohre gewickelt werden.

Gemäß einer weiteren Ausführungsform weist der Wickelkopf einen Basiskörper auf, an dem das Wickelkopfunterteil mit Hilfe eines Führungselements linear verschiebbar gelagert ist, wobei das Wickelkopfunterteil mit Hilfe des Federelements gegen den Basiskörper vorgespannt ist.

Der Basiskörper kann beispielsweise blockförmig oder quaderförmig sein. Aus dem Basiskörper erstrecken sich vorzugsweise zwei Führungselemente heraus. Die Führungselemente können stangenförmig sein. An den Führungselementen ist das Wickelkopfunterteil gegenüber dem Basiskörper linear verschieblich gelagert. Jedem Führungselement kann ein Federelement zugeordnet sein. Beispielsweise sind die Führungselemente zumindest abschnittsweise innerhalb der Federelemente angeordnet. Die Federelemente drücken das Wickelkopfunterteil gegen den Basiskörper. Durch das Aufbringen einer Kraft, insbesondere bei einem Abziehen der Wärmeübertragerrohre aus dem Wickelkopf, auf das Wickelkopfunterteil wird das Wickelkopfunterteil gegen Federkräfte der Federelemente von dem Basiskörper abgehoben. Wirkt diese Kraft nicht mehr auf das Wickelkopfunterteil, so bewegen die Federelemente das Wickelkopfunterteil zurück in Richtung des Basiskörpers.

Gemäß einer weiteren Ausführungsform weist das Wickelkopfunterteil ein unteres Führungselement auf, wobei das Wickelkopfoberteil ein oberes Führungselement aufweist, und wobei das untere Führungselement und das obere Führungselement dazu eingerichtet sind, die Wärmeübertragerrohre den unteren Führungsrollen und den oberen Führungsrollen zuzuführen.

Das untere Führungselement ist an dem Wickelkopfunterteil montiert. Das obere Führungselement ist an dem Wickelkopfoberteil montiert. Die Führungselemente sind im Gegensatz zu den Führungsrollen insbesondere unbeweglich. Die Führungselemente können insbesondere kammförmig ausgebildet sein. Jedes Führungselement weist vorzugsweise eine Vielzahl von Führungsnuten auf, durch welche im Betrieb der Wickelanlage die Wärmeübertragerrohre den Führungsrollen des Wickelkopfs zugeführt werden. Die Führungselemente können beispielsweise aus einem Kunststoffmaterial gefertigt sein.

Gemäß einer weiteren Ausführungsform weist die Wickelvorrichtung einen Viergelenkausleger mit einem Querviergelenk, das den Wickelkopf trägt, auf, wobei das Querviergelenk dazu eingerichtet ist, Sensordaten betreffend eine Auslenkung des Querviergelenks an eine Bedien- und Steuereinheit der Wickelanlage auszugeben.

Mit Hilfe der Bedien- und Steuereinheit kann die Wickelanlage bedient und gesteuert werden. Beispielsweise kann ein Bediener der Wickelanlage mit Hilfe der Bedien- und Steuereinheit die Behälterdrehvorrichtung und die Wickelvorrichtung bedienen. Das Querviergelenk weist in einem unausgelenkten Zustand insbesondere eine rechteckförmige Geometrie auf. Aus diesem unausgelenkten Zustand kann das Querviergelenk in einen ausgelenkten Zustand verbracht werden, in welchem das Querviergelenk eine parallelförmige Geometrie aufweist. Bei dieser Auslenkung erzeugt das Querviergelenk Sensordaten, die einen Rückschluss auf eine Größe der Auslenkung und auf eine Richtung der Auslenkung geben. Diese Sensordaten werden an die Bedien- und Steuereinheit weitergegeben.

Gemäß einer weiteren Ausführungsform ist die Bedien- und Steuereinheit dazu eingerichtet, eine Winkelgeschwindigkeit der Behälterdrehvorrichtung um die Mittelachse und/oder eine Verfahrgeschwindigkeit der Wickelvorrichtung entlang der Mittelachse basierend auf den Sensordaten des Querviergelenks anzupassen.

Wird das Querviergelenk ausgelenkt, so kann je nach der Größe und der Richtung der Auslenkung die Winkelgeschwindigkeit der Behälterdrehvorrichtung beispielsweise vergrößert oder verkleinert werden. Entsprechendes gilt für die Verfahrgeschwindigkeit der Wickelvorrichtung. Das Querviergelenk ermöglicht es, Toleranzabweichungen an den Stegen, insbesondere hinsichtlich der Ausnehmungen der Stege, in welche die Wärmeübertragerrohre gewickelt werden, sowie Geschwindigkeitsabweichungen der Wickelvorrichtung auszugleichen. Ferner ermöglicht das Querviergelenk einen Ausgleich von Steigungs- und/oder Positionsfehlern der Wärmeübertragerrohre während des Wickelvorgangs.

Gemäß einer weiteren Ausführungsform weist das Querviergelenk zwei kurze Schenkel und zwei lange Schenkel auf, wobei die kurzen Schenkel und die langen Schenkel an Gelenkpunkten drehbar miteinander verbunden sind, und wobei an einem der Gelenkpunkte ein Drehgeber zum Erzeugen der Sensordaten des Querviergelenks angeordnet ist.

Die beiden kurzen Schenkel sind zwischen den beiden langen Schenkeln angeordnet. Mit anderen Worten ist immer ein kurzer Schenkel zwischen zwei langen Schenkeln und ein langer Schenkel zwischen zwei kurzen Schenkeln angeordnet. An einem der kurzen Schenkel ist der Wickelkopf montiert. Die Schenkel können beispielsweise Profilträger, insbesondere Aluminiumprofilträger, sein. Der Wickelkopf ist endseitig an dem Querviergelenk montiert.

Gemäß einer weiteren Ausführungsform weist der Viergelenkausleger eine Sortiereinheit zum Ablegen der Wärmeübertragerrohre auf dem Kernrohr oder auf dem bereits teilweise gewickelten Rohrbündel auf, wobei der Wickelkopf zwischen dem Querviergelenk und der Sortiereinheit angeordnet ist.

Mit anderen Worten ist die Sortiereinheit entlang der Abzugsrichtung betrachtet nach dem Wickelkopf angeordnet. Die Wärmeübertragerrohre werden daher der Sortiereinheit von dem Wickelkopf zugeführt. Die Sortiereinheit legt die Wärmeübertragerrohre in den Ausnehmungen der Stege ab. Die Sortiereinheit kann beispielsweise eine drehbar gelagerte Führungsrolle aufweisen. Diese Führungsrolle umfasst vorzugsweise eine Vielzahl von Führungsnuten, in welchen die Wärmeübertragerrohre aufgenommen werden können.

Gemäß einer weiteren Ausführungsform weist die Wickelvorrichtung eine Geraderichteinheit zum Geraderichten der Wärmeübertragerrohre auf.

Die Geraderichteinheit kann eine Vielzahl von Geraderichtrollen aufweisen, zwischen denen die Wärmeübertragerrohre hindurchgeführt werden, um diese geradezurichten. Die Geraderichteinheit ist entlang der Abzugsrichtung betrachtet vor dem Wickelkopf angeordnet. Das heißt insbesondere, dass die Geraderichteinheit die Wärmeübertragerrohre dem Wickelkopf zuführt.

Gemäß einer weiteren Ausführungsform weist die Wickelvorrichtung mehrere Rohrtrommeln für die Wärmeübertragerrohre auf, wobei jede Rohrtrommel eine Bremse zum Abbremsen der jeweiligen Rohrtrommel aufweist.

Die Bremsen können insbesondere auch manuell betätigt werden. Die Bremsen können von der Bedien- und Steuereinheit angesteuert oder geregelt werden. Insbesondere sind die Bremsen bei dem Wickelvorgang stets betätigt, so dass die Rohrtrommeln nicht in unerwünschter Weise nachlaufen und sich die Wärmeübertragerrohre so verheddern können. Eine Anzahl der Rohrtrommeln ist beliebig. Die Anzahl der Rohrtrommeln entspricht jedoch der Anzahl der zeitgleich zu wickelnden Wärmeübertragerrohre. Beispielsweise sind vier derartige Rohrtrommeln vorgesehen. Jede Rohrtrommel trägt ein sogenanntes Coil mit einem Wärmeübertragerrohr. Jedes Coil kann beispielsweise 4.000 Meter des jeweiligen Wärmeübertragerrohrs tragen.

Gemäß einer weiteren Ausführungsform weist die Wickelvorrichtung einen Spulenwagen, der entlang Laufschienen linear verfahrbar ist, und einen drehbar an dem Spulenwagen gelagerten Spulenturm auf, der die Rohrtrommeln trägt.

Die Laufschienen verlaufen vorzugsweise parallel zur der Mittelachse. Beispielsweise sind zwei derartige Laufschienen vorgesehen. Der Spulenwagen umfasst einen Antrieb. Der Antrieb kann beispielsweise einen Elektromotor aufweisen, der den Spulenwagen mit Hilfe einer Zahnstange entlang der Laufschienen verfahren kann. Der Spulenturm kann gegenüber dem Spulenwagen verdreht und in einer beliebigen Position arretiert werden. Der Viergelenkausleger ist mit dem Spulenturm verbunden und kann gegenüber dem Spulenturm verdreht und verschwenkt und in einer beliebigen Position arretiert werden. Der Viergelenkausleger kann auch entlang des Spulenturms verfahren werden. Hierzu kann ein Spindelantrieb vorgesehen sein.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zahlwort ist nicht dahingehend zu verstehen, dass eine genaue Beschränkung auf genau die entsprechende Anzahl von Elementen verwirklich sein muss. Vielmehr sind zahlenmäßige Abweichungen nach oben und nach unten möglich.

Weitere mögliche Implementierungen der Wickelanlage umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Wickelanlage hinzufügen.

Weitere vorteilhafte Ausgestaltungen der Wickelanlage sind Gegenstand der Unteransprüche sowie der im Folgenden beschriebenen Ausführungsbeispiele der Wickelanlage. Im Weiteren wird die Wickelanlage anhand von bevorzugten Ausführungsformen unter Bezugnahme auf die beigelegten Figuren näher erläutert.
Fig. 1 zeigt eine schematische perspektivische Teilschnittansicht einer Ausführungsform eines gewickelten Wärmeübertragers;
Fig. 2 zeigt eine schematische Detailansicht des Wärmeübertragers gemäß Fig. 1;
Fig. 3 zeigt eine weitere schematische Detailansicht des Wärmeübertragers gemäß Fig. 1;
Fig. 4 zeigt eine schematische perspektivische Ansicht einer Wickelanlage zum Wickeln des Wärmeübertragers gemäß Fig. 1;
Fig. 5 zeigt eine schematische Seitenansicht der Wickelanlage gemäß Fig. 4;

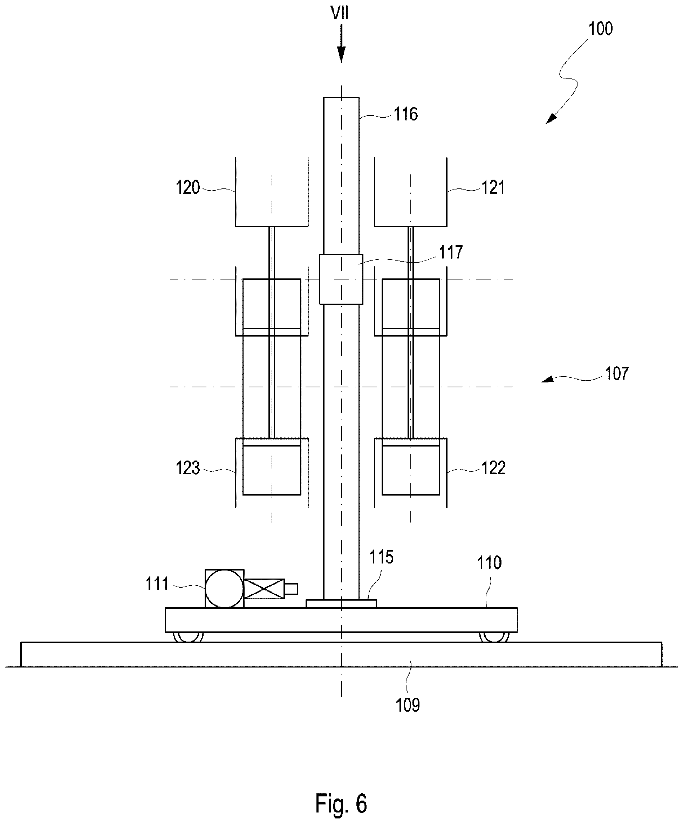

Fig. 6 zeigt eine schematische Schnittansicht der Wickelanlage gemäß der Schnittlinie VI-VI der Fig. 5;
Fig. 7 zeigt die Ansicht VII gemäß Fig. 6;
Fig. 8 zeigt eine Aufsicht einer Ausführungsform eines Viergelenkauslegers für die Wickelanlage gemäß Fig. 4;
Fig. 9 zeigt eine schematische perspektivische Ansicht einer Ausführungsform eines Wickelkopfs für die Wickelanlage gemäß Fig. 4; und
Fig. 10 zeigt ein schematisches Blockdiagramm einer Ausführungsform eines Verfahrens zum Wickeln eines Rohrbündels für den Wärmeübertrager gemäß Fig. 1.

In den Figuren sind gleiche oder funktionsgleiche Elemente mit denselben Bezugszeichen versehen worden, sofern nichts anderes angegeben ist.

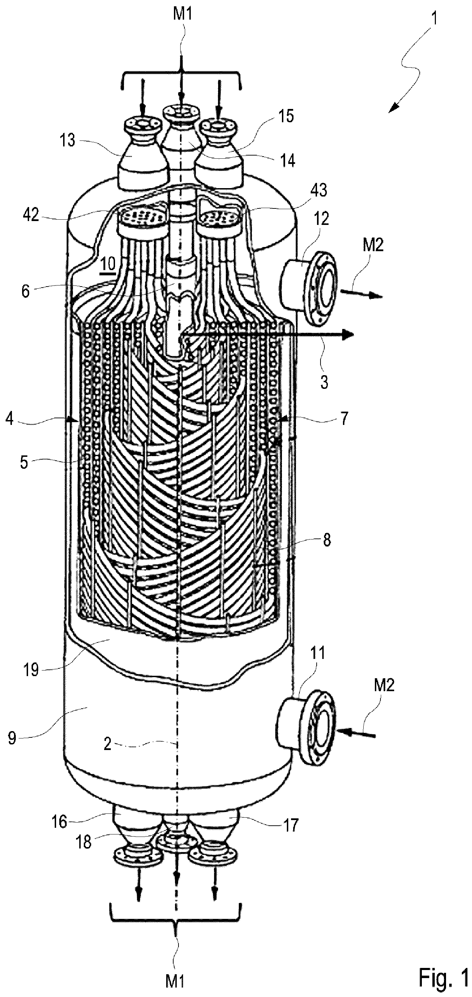

Die Fig. 1 zeigt eine schematische perspektivische Teilschnittansicht einer Ausführungsform eines gewickelten Wärmeübertragers 1.

Der Wärmeübertrager 1 kann auch als Wärmetauscher bezeichnet werden. Insbesondere ist der Wärmeübertrager 1 ein Rohrbündelwärmetauscher und kann daher auch als solcher bezeichnet werden. Dem Wärmeübertrager 1 ist eine Symmetrie- oder Mittelachse 2 zugeordnet, zu welcher der Wärmeübertrager 1 zumindest abschnittsweise rotationssymmetrisch aufgebaut sein kann. Ferner ist dem Wärmeübertrager 1 eine Radialrichtung 3 zugeordnet. Die Radialrichtung 3 ist senkrecht zu der Mittelachse 2 orientiert und weist von dieser weg.

Der Wärmeübertrager 1 weist ein Rohrbündel 4 auf, das im Wesentlichen rotationsymmetrisch zu der Mittelachse 2 aufgebaut ist. Das Rohrbündel 4 weist eine Vielzahl von Wärmeübertragerrohren 5 auf, von denen in der Fig. 1 nur eines mit einem Bezugszeichen versehen ist. Die Wärmeübertragerrohre 5 sind schraubenförmig und mehrlagig auf ein Kernrohr 6 des Wärmeübertragers 1 gewickelt, welches sich entlang der Mittelachse 2 erstreckt, so dass das Rohrbündel 4 mehrere Rohrlagen 7 aufweist. Die Wärmeübertragerrohre 5 liegen in der Radialrichtung 3 betrachtet übereinander. Die Wärmeübertragerrohre 5 sind zur Aufnahme zumindest eines ersten fluiden Mediums M1 geeignet.

Zwischen einer bezüglich der Radialrichtung 3 innersten Rohrlage 7 des Rohrbündels 4 und dem Kernrohr 6 sowie zwischen jeweils zwei in der Radialrichtung 3 benachbarten Rohrlagen 7 des Rohrbündels 4 ist eine in einer Umfangsrichtung der Rohrlagen 7 jeweils vorzugsweise konstante Vielzahl von Stegen 8 angeordnet, von denen in der Fig. 1 nur einer mit einem Bezugszeichen versehen ist. Mit anderen Worten ist zwischen jeweils zwei in der Radialrichtung 3 benachbarten Rohrlagen 7 die gleiche Anzahl an Stegen 8 angeordnet. Die Stege 8 erstrecken sich jeweils entlang der Mittelachse 2 und sind in der Radialrichtung 3 übereinander angeordnet.

Das Rohrbündel 4 ist von einem zylindrisch ausgeformten Mantel 9 umschlossen, der einen Mantelraum 10 begrenzt, innerhalb dem das Rohrbündel 4 zusammen mit dem Kernrohr 6 angeordnet ist. In den Mantelraum 10 ist zum Beispiel über einen Einlassstutzen 11 ein zweites fluides Medium M2 einleitbar sowie über einen Auslassstutzen 12 aus dem Mantelraum 10 abziehbar, sodass das erste Medium M1 sowie das zweite Medium M2 im Betrieb des Wärmeübertragers 1 miteinander indirekt Wärme austauschen können.

Die Wärmeübertragerrohre 5 können in mehrere Rohrgruppen unterteilt sein, wobei jeder Rohrgruppe ein Einlassstutzen 13, 14, 15, durch den das erste Medium M1 zuführbar ist, und einen Auslassstutzen 16, 17, 18, durch den das erste Medium M1 abziehbar ist, zugeordnet ist. Im vorliegenden Fall sind demgemäß drei Rohrgruppen vorgesehen. Die drei Einlassstutzen 13, 14, 15 und damit auch die drei Rohrgruppen können zum Beispiel auch mit unterschiedlichen ersten Medien M1 beschickt werden. Des Weiteren kann das Rohrbündel 4 von einem zylindrischen Hemd 19 umgeben sein, das dazu dient, eine Bypassströmung in dem Mantelraum 10 an dem Rohrbündel 4 vorbei zu unterdrücken.

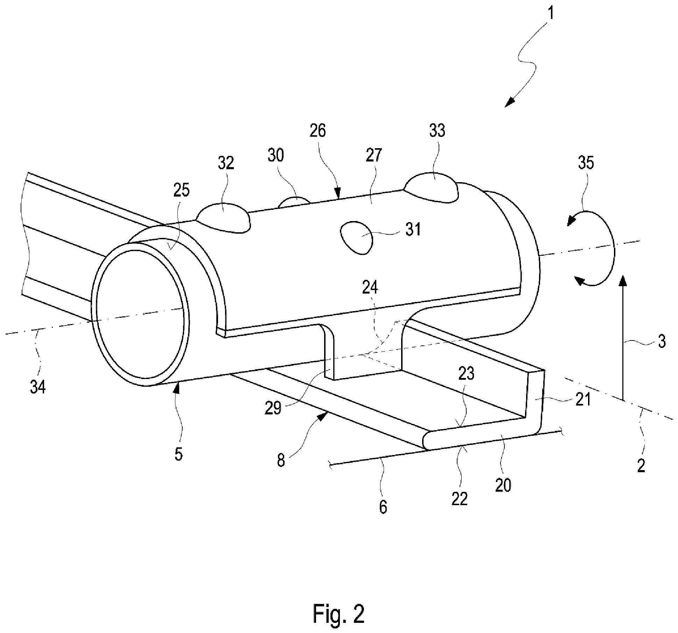

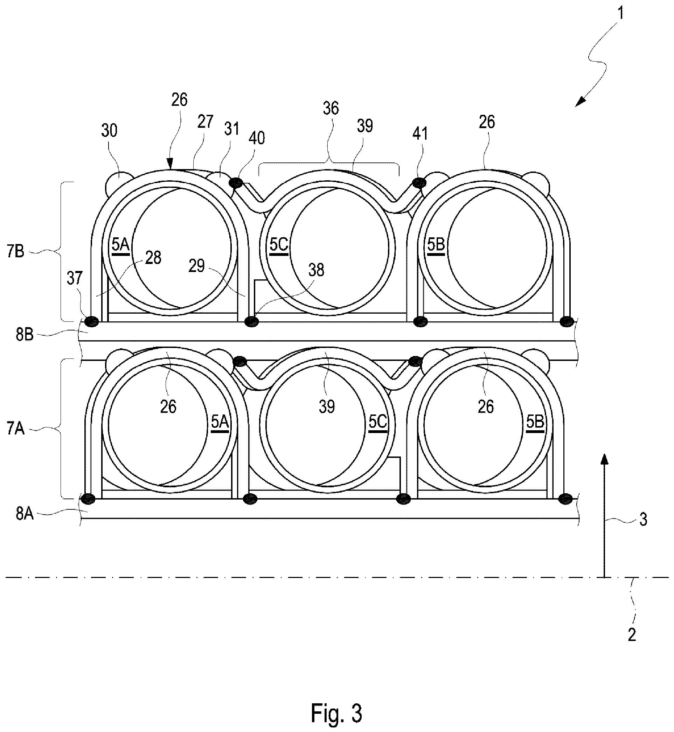

Die Fig. 2 zeigt eine schematische perspektivische Detailansicht des Wärmeübertragers 1. Die Fig. 3 zeigt eine weitere Detailansicht des Wärmeübertragers 1. Nachfolgend wird auf die Fig. 2 und 3 gleichzeitig Bezug genommen.

Insbesondere zeigt die Fig. 2 einen der Stege 8, an dem eines der Wärmeübertragerrohre 5 befestigt ist. Der Steg 8 verläuft entlang der Mittelachse 2. Der Steg 8 kann eine T-förmige oder L-förmige Querschnittsgeometrie aufweisen. Nachfolgend wird davon ausgegangen, dass der Steg 8 eine L-förmige Querschnittsgeometrie aufweist. Der Steg 8 umfasst einen langen oder ersten Schenkel 20, der im vorliegenden Fall mit dem Kernrohr 6 verbunden, insbesondere verschweißt, ist, und einen kurzen oder zweiten Schenkel 21, der senkrecht zu dem ersten Schenkel 20 orientiert ist. Der erste Schenkel 20 weist eine erste oder untere Kontaktfläche 22, an welcher das Kernrohr 6 anliegt, und eine von der unteren Kontaktfläche 22 und damit von dem Kernrohr 6 wegweisende zweite oder obere Kontaktfläche 23 auf. Auf der oberen Kontaktfläche 23 kann das Wärmeübertragerrohr 5 aufliegen.

Der Steg 8 weist an dem zweiten Schenkel 21 eine Vielzahl von konkaven Ausnehmungen 24 auf, von denen in der Fig. 2 nur eine gezeigt ist. In der Ausnehmung 24 liegt das Wärmeübertragerrohr 5. Eine Geometrie der Ausnehmung 24 kann demgemäß an eine Außengeometrie des Wärmeübertragerrohrs 5 angepasst sein. Entlang des Stegs 8 und damit auch entlang der Mittelachse 2 sind eine Vielzahl derartiger Ausnehmungen 24 gleichmäßig voneinander beabstandet oder äquidistant zueinander angeordnet. Dies ist jedoch nicht zwingend erforderlich. Es ist auch möglich, dass die Ausnehmungen 24 ungleichmäßig voneinander beabstandet angeordnet sind. Wie zuvor erwähnt, ist in der Fig. 2 jedoch nur eine derartige Ausnehmung 24 gezeigt. Das Wärmeübertragerrohr 5 weist eine Außenfläche 25 auf, mit der das Wärmeübertragerrohr 5 in der Ausnehmung 24 auf dem zweiten Schenkel 21 aufliegen kann.

Das Wärmeübertragerrohr 5 ist mit Hilfe eines ersten Befestigungsbügels 26 mit dem Steg 8 verbunden. Der erste Befestigungsbügel 26 umgreift das Wärmeübertragerrohr 5. Da der erste Befestigungsbügel 26 das Wärmeübertragerrohr 5 umgreift, kann dieser auch als Vollbügel bezeichnet werden. Der erste Befestigungsbügel 26 weist einen Umgreifabschnitt 27, der an der Außenfläche 25 des Wärmeübertragerrohrs 5 anliegt, und zwei Befestigungsabschnitte 28, 29 (Fig. 3), die mit dem Steg 8, insbesondere dem ersten Schenkel 20 des Stegs 8 verbunden, insbesondere verschweißt sind. Der Umgreifabschnitt 27 ist zwischen den Befestigungsabschnitten 28, 29 angeordnet.

Der Umgreifabschnitt 27 weist zwei erste Befestigungsbereiche 30, 31 auf. Die ersten Befestigungsbereiche 30, 31 sind konvex gekrümmt und erstrecken sich somit nach außen aus dem Umgreifabschnitt 27 heraus. Dabei liegt das Wärmeübertragerrohr 5 mit seiner Außenfläche 25 jedoch innenseitig an den ersten Befestigungsbereichen 30, 31 nicht an. Hierzu sind die ersten Befestigungsbereiche 30, 31 innenseitig, das heißt der Außenfläche 25 zugewandt, hohl ausgestaltet. Mit anderen Worten weisen die ersten Befestigungsbereiche 30, 31 der Außenfläche 25 zugewandt jeweils eine Vertiefung auf. Dies kann dadurch erzielt werden, dass die ersten Befestigungsbereiche 30, 31 an ein blechförmiges Halbzeug des ersten Befestigungsbügels 26 mit Hilfe eines umformenden Fertigungsverfahrens, wie beispielsweise Tiefziehen, angeformt werden. Durch diese Geometrie der ersten Befestigungsbereiche 30, 31 wird ein Wärmeeintrag in das Wärmeübertragerrohr 5 verhindert oder zumindest reduziert, wenn an den Befestigungsbereichen 30, 31 Schweißarbeiten vorgenommen werden.

Zusätzlich weist der Umgreifabschnitt 27 zwei zweite Befestigungsbereiche 32, 33 auf, mit deren Hilfe der erste Befestigungsbügel 26 mit einem weiteren Steg 8, der in der Fig. 2 nicht gezeigt ist, verbunden, insbesondere verschweißt werden kann. Dieser weitere Steg 8 ist entlang der Radialrichtung 3 betrachtet zu dem in der Fig. 2 gezeigten Steg 8 radial nach außen versetzt angeordnet. Die zweiten Befestigungsbereiche 32, 33 sind analog zu den ersten Befestigungsbereichen 30, 31 aufgebaut. Das heißt, dass auch die zweiten Befestigungsbereiche 32, 33 innenseitig nicht auf der Außenfläche 25 des Wärmeübertragerrohrs 5 aufliegen.

Entlang einer Symmetrie- oder Mittelachse 34 des Wärmeübertragerrohrs 5 betrachtet, sind die ersten Befestigungsbereiche 30, 31 auf derselben Höhe platziert. Dafür sind die ersten Befestigungsbereiche 30, 31 entlang einer Umfangsrichtung 35 des Wärmeübertragerrohrs 5 betrachtet zueinander versetzt platziert. Die zweiten Befestigungsbereiche 32, 33 sind hingegen entlang der Mittelachse 34 betrachtet zueinander versetzt platziert, wohingegen die zweiten Befestigungsbereiche 32, 33 entlang der Umfangsrichtung 35 betrachtet auf derselben Umfangsposition platziert sind. Entlang der Mittelachse 34 betrachtet sind die ersten Befestigungsbereiche 30, 31 zwischen den zweiten Befestigungsbereichen 32, 33 platziert. Entlang der Umfangsrichtung 35 betrachtet, sind die zweiten Befestigungsbereiche 32, 33 zwischen den erste Befestigungsbereichen 30, 31 platziert.

Die Fig. 3 zeigt zwei wie zuvor erwähnte Rohrlagen 7A, 7B, die in der Radialrichtung 3 aufeinandergeschichtet sind. Das Rohrbündel 4 weist beliebig viele Rohrlagen 7A, 7B auf. Jeder Rohrlage 7A, 7B ist ein wie zuvor erläuterter Steg 8A, 8B zugeordnet. Entlang der Radialrichtung 3 betrachtet, ist der Steg 8A näher an der Mittelachse 2 positioniert als der Steg 8B. Der Steg 8A kann mit dem in der Fig. 3 nicht gezeigten Kernrohr 6 verbunden, insbesondere verschweißt, sein.

Jede Rohrlage 7A, 7B weist erste Wärmeübertragerrohre 5A, 5B und zweite Wärmeübertragerrohre 5C auf. Die ersten Wärmeübertragerrohre 5A, 5B und die zweiten Wärmeübertragerrohre 5C sind baugleich. "Baugleich" schließt vorliegend nicht aus, dass ersten Wärmeübertragerrohre 5A, 5B und die zweiten Wärmeübertragerrohre 5C unterschiedliche Längen aufweisen. Die ersten Wärmeübertragerrohre 5A, 5B unterscheiden sich nur dadurch von den zweiten Wärmeübertragerrohren 5C, dass die ersten Wärmeübertragerrohre 5A, 5B zeitlich vor den zweiten Wärmeübertragerrohren 5C gewickelt werden. Mit anderen Worten werden zunächst zeitgleich die ersten Wärmeübertragerrohre 5A, 5B auf den jeweiligen Steg 8A, 8B gewickelt, wobei anschließend zeitgleich die zweiten Wärmeübertragerrohre 5C auf den jeweiligen Steg 8A, 8B gewickelt werden. Die Wärmeübertragerrohre 5A, 5B, 5C werden dabei in den Ausnehmungen 24 (Fig. 2) der Stege 8A, 8B aufgenommen. Die Wärmeübertragerrohre 5A, 5B, 5C sind spiralförmig oder schraubenförmig um die Mittelachse 2 gewunden.

Eine jeweilige Anzahl der ersten Wärmeübertragerrohre 5A, 5B und der zweiten Wärmeübertragerrohre 5C ist beliebig. Beispielsweise sind zwei, drei, vier, fünf oder mehr erste Wärmeübertragerrohre 5A, 5B und zwei, drei, vier, fünf oder mehr zweite Wärmeübertragerrohre 5C vorgesehen. Die Anzahl der ersten Wärmeübertragerrohre 5A, 5B und die Anzahl der zweiten Wärmeübertragerrohre 5C ist vorzugsweise identisch. Die Wärmeübertragerrohre 5A, 5B, 5C sind dabei derart angeordnet, dass zwischen zwei ersten Wärmeübertragerrohren 5A, 5B immer ein zweites Wärmeübertragerrohr 5C und zwischen zwei zweiten Wärmeübertragerrohren 5C immer ein erstes Wärmeübertragerrohr 5A, 5B angeordnet ist. Dies kann dadurch erreicht werden, dass die ersten Wärmeübertragerrohre 5A, 5B derart auf den jeweiligen Steg 8A, 8B aufgewickelt werden, dass zwischen zwei ersten Wärmeübertragerrohren 5A, 5B immer eine Lücke 36 mit einer Ausnehmung 24 freibleibt. In diese Lücken 36 werden dann die zweiten Wärmeübertragerrohre 5C gewickelt.

Nach dem Wickeln der ersten Wärmeübertragerrohre 5A, 5B werden diese mit Hilfe der ersten Befestigungsbügel 26 an dem jeweiligen Steg 8A, 8B festgelegt. Hierzu werden die Befestigungsabschnitte 28, 29 mit Hilfe von Schweißpunkten 37, 38 mit dem jeweiligen Steg 8A, 8B verschweißt. Sind die ersten Wärmeübertragerrohre 5A, 5B an dem jeweiligen Steg 8A, 8B festgelegt, werden die zweiten Wärmeübertragerrohre 5C in die Lücken 36 gewickelt und mit Hilfe von zweiten Befestigungsbügeln 39 an den ersten Befestigungsbügeln 26 festgelegt. Das heißt, dass die zweiten Befestigungsbügel 39 nicht mit dem jeweiligen Steg 8A, 8B verbunden sind, sondern mit zwei benachbarten ersten Befestigungsbügeln 26. Hierzu werden die zweiten Befestigungsbügel 39 mit Hilfe von Schweißpunkten 40, 41 mit den ersten Befestigungsbereichen 30, 31 der ersten Befestigungsbügel 26 verschweißt. Die zweiten Befestigungsbügel 39 können auch als Bügelkappen bezeichnet werden.

Vor dem Wickeln der ersten Wärmeübertragerrohre 5A, 5B kann ein weiteres Wärmeübertragerrohr 5 (nicht gezeigt) als Führungsrohr in einer gewünschten Steigung relativ zu der Mittelachse 2 gewickelt werden. Die ersten Wärmeübertragerrohre 5A, 5B richten sich mit ihrer Steigung relativ zu der Mittelachse 2 dann an diesem als Führungsrohr fungierenden Wärmeübertragerrohr 5 aus. Die zweiten Wärmeübertragerrohre 5C richten sich bei dem Wickeln an den ersten Wärmeübertragerrohren 5A, 5B aus.

Ist die Rohrlage 7A fertig gewickelt, wird eine Vielzahl von Stegen 8B auf die ersten Befestigungsbügel 26 der Rohrlage 7A aufgelegt und an den zweiten Befestigungsbereichen 32, 33 mit den ersten Befestigungsbügeln 26 verschweißt. Anschließend wird auf die Stege 8B die Rohrlage 7B gewickelt und die Wärmeübertragerrohre 5A, 5B, 5C der Rohrlage 7B werden mit den Stegen 8B verbunden. Die Wärmeübertragerrohre 5A, 5B, 5C der unterschiedlichen Rohrlagen 7A, 7B weisen unterschiedliche, insbesondere gegensätzliche, Orientierungen bezüglich der Mittelachse 2 auf. In unterschiedlichen Rohrlagen 7A, 7B können die Ausnehmungen 24 der Stege 8A, 8B unterschiedlich voneinander beabstandet angeordnet sein. Hierdurch ist es möglich, in unterschiedlichen Rohrlagen 7A, 7B unterschiedliche Steigungen der Wärmeübertragerrohre 5A, 5B, 5C zu verwirklichen.

Die Wärmeübertragerrohre 5A, 5B, 5C werden an ihrem einen Ende vor dem Wickeln und an ihrem anderen Ende nach dem Wickel in Rohrböden 42, 43 (Fig. 1) der Einlassstutzen 13, 14, 15 oder der Auslassstutzen 16, 17, 18 eingefädelt und mit diesen verbunden, insbesondere verschweißt. In der Fig. 1 sind nur die Rohrböden 42 43 der Einlassstutzen 13, 15 gezeigt. Es weist jedoch sowohl jeder Einlassstutzen 13, 14, 15 als auch jeder Auslassstutzen 16, 17, 18 einen derartigen Rohrboden 42, 43 auf.

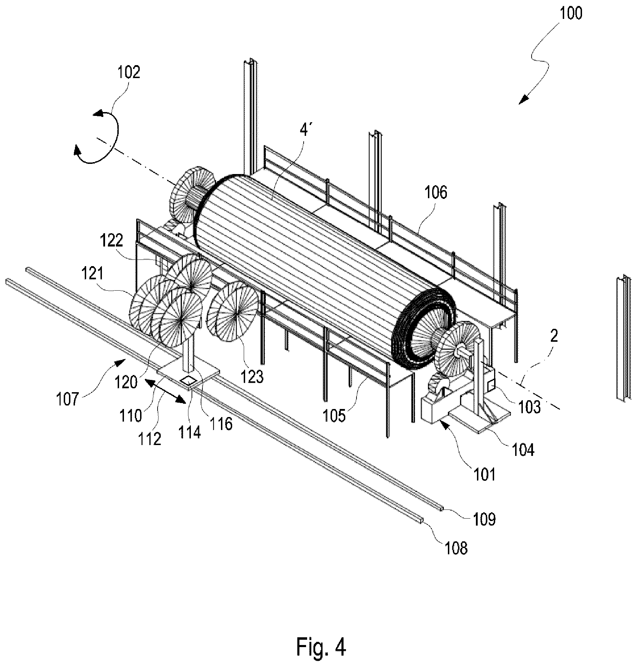

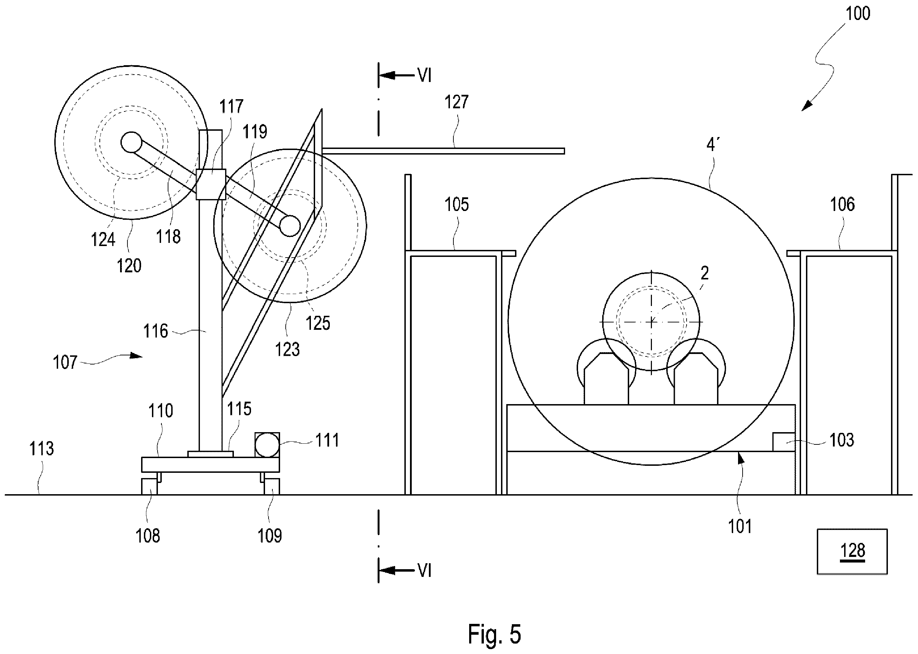

Die Fig. 4 zeigt eine schematische perspektivische Ansicht einer Ausführungsform einer Wickelanlage 100 zum Wickeln des Wärmeübertragers 1. Die Fig. 5 zeigt eine schematische Seitenansicht der Wickelanlage 100. Nachfolgend wird auf die Fig. 4 und 5 gleichzeitig Bezug genommen.

Die Wickelanlage 100 umfasst eine Behälterdrehvorrichtung 101 zum Drehen des Kernrohrs 6 oder eines bereits teilweise gewickelten Rohrbündels 4' um die Mittelachse 2, wie in der Fig. 4 mit Hilfe eines Doppelpfeils 102 angedeutet ist. Die Mittelachse 2 fungiert somit als Drehachse. Daher kann die Mittelachse 2 auch als Drehachse bezeichnet werden. Die Behälterdrehvorrichtung 101 weist einen Drehgeber 103 auf, mit dessen Hilfe eine Drehzahl und eine Winkelposition des Kernrohrs 6 oder des teilweise gewickelten Rohrbündels 4' erfasst werden kann. Ferner weist die Wickelanlage 100 eine Ablaufsicherung 104 auf, mit deren Hilfe das Kernrohr 6 oder das teilweise gewickelte Rohrbündel 4' entlang der Mittelachse 2 in Position gehalten wird. Beidseits der Behälterdrehvorrichtung 101 kann jeweils eine Arbeitsbühne 105, 106 angeordnet sein.

Die Wickelanlage 100 weist eine Wickelvorrichtung 107 mit einem an Laufschienen 108, 109 geführten Spulenwagen 110 auf, der mit Hilfe eines Antriebs 111, insbesondere umfassend einen Elektromotor, entlang der Laufschienen 108, 109 verfahren werden kann, wie in der Fig. 4 mit Hilfe eines Doppelpfeils 112 angedeutet ist. Die Laufschienen 108, 109 sind eben und fluchtgenau auf einem Hallenboden 113 montiert und ausreichend für auftretenden Kräfte dimensioniert. Eine Laufschienenoberfläche der Laufschienen 108, 109 gewährleistet einen ruhigen Lauf des Spulenwagens 110. Die Wickelvorrichtung 107 weist eine Abzugssicherung auf, um zu verhindern, dass die Wickelvorrichtung 107 bei einer zu starken Zugkraft auf die Wärmeübertragerrohre 5, 5A, 5B, 5C kippt.

Der Antrieb 111 greift in eine nicht gezeigte Zahnstange ein, mit deren Hilfe der Spulenwagen 110 so entlang der Laufschienen 108, 109 bewegt wird. Eine Position des Spulenwagens 110 entlang der Laufschienen 108, 109 wird mit Hilfe eines Drehgebers 114 erfasst. Eine Energiezufuhr zu dem Antrieb 111 erfolgt bevorzugt mit Hilfe eines Kabelschlepps.

Mit Hilfe eines Drehkranzes 115 ist ein Spulenturm 116 drehbar an dem Spulenwagen 110 montiert. Der Drehkranz 115 lässt sich in einem Bereich von ± 30° senkrecht zu der Mittelachse 2 stufenlos verstellen und dauerhaft klemmen. Entlang des Spulenturms 116 ist linear verschiebbar ein Schiebestück 117 gelagert. Das Schiebestück 117 lässt sich über eine gesamte Höhe des Spulenturms 116 verschieben und in der gewünschten Höhe mit Hilfe von Bolzen arretieren. Alternativ kann das Schiebestück 117 mit Hilfe eines Spindelantriebs stufenlos in der Höhe verstellbar sein.

An dem Schiebestück 117 sind mehrere Ausleger 118, 119 angebracht. Beispielsweise sind zwei Ausleger 118, 119 vorgesehen. Eine Anzahl der Ausleger 118, 119 ist jedoch beliebig. Jeder Ausleger 118, 119 trägt zwei Rohrtrommeln 120, 121, 122, 123. Eine Anzahl der Rohrtrommeln 120, 121, 122, 123 ist beliebig. Jede Rohrtrommel 120, 121, 122, 123 trägt ein Coil der zu wickelnden Wärmeübertragerrohre 5, 5A, 5B, 5C. Für den Fall, dass jeweils immer vier Wärmeübertragerrohre 5, 5A, 5B, 5C gleichzeitig gewickelt werden, sind genau vier Rohrtrommeln 120, 121, 122, 123 vorgesehen. Jede Rohrtrommel 120, 121, 122, 123 weist eine Bremse 124, 125 zum Abbremsen der jeweiligen Rohrtrommel 120, 121, 122, 123 auf, um ein Nachlaufen der Rohrtrommeln 120, 121, 122, 123 bei einem Bündelstopp zu verhindern.

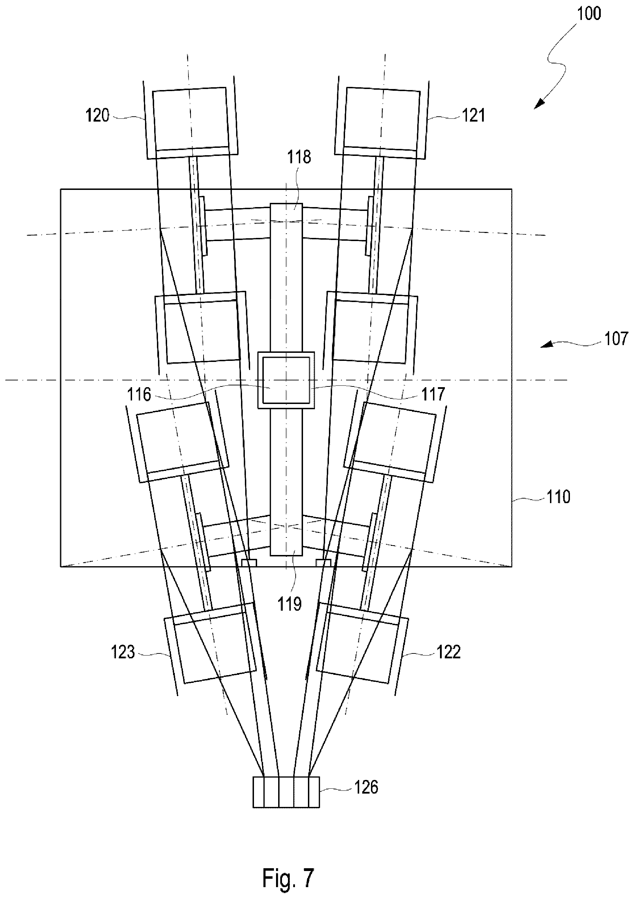

Die von den Rohrtrommeln 120, 121, 122, 123 abgewickelten Wärmeübertragerrohre 5, 5A, 5B, 5C werden einer Geraderichteinheit 126 (Fig. 7) zum Geraderichten der von den Rohrtrommeln 120, 121, 122, 123 abgewickelten Wärmeübertragerrohre 5, 5A, 5B, 5C zugeführt. Von der Geraderichteinheit 126 werden die gerichteten Wärmeübertragerrohre 5, 5A, 5B, 5C dem Kernrohr 6 oder dem teilweise gewickelten Rohrbündel 4' mit Hilfe eines Viergelenkauslegers 127 zugeführt, der nur in der Fig. 5 stark schematisiert gezeigt ist. An dem Viergelenkausleger 127 kann die Geraderichteinheit 126 montiert sein. Der Viergelenkausleger 127 ist an dem Spulenturm 116 oder an dem Schiebestück 117 spielfrei, drehbar und feststellbar gelagert. Viergelenkausleger 127 kann mit Hilfe eines Viergelenkarms an dem Spulenturm 116 oder an dem Schiebestück 117 montiert sein.

Die Wickelanlage 100 umfasst ferner eine Bedien- und Steuereinheit 128 zum Bedienen und Steuern der Wickelanlage 100. Sensordaten der Drehgeber 103, 114 werden der Bedien- und Steuereinheit 128 zur Verfügung gestellt. Mit Hilfe der Bedien- und Steuereinheit 128 lassen sich die Behälterdrehvorrichtung 101 und die Wickelvorrichtung 107 bedienen oder steuern.

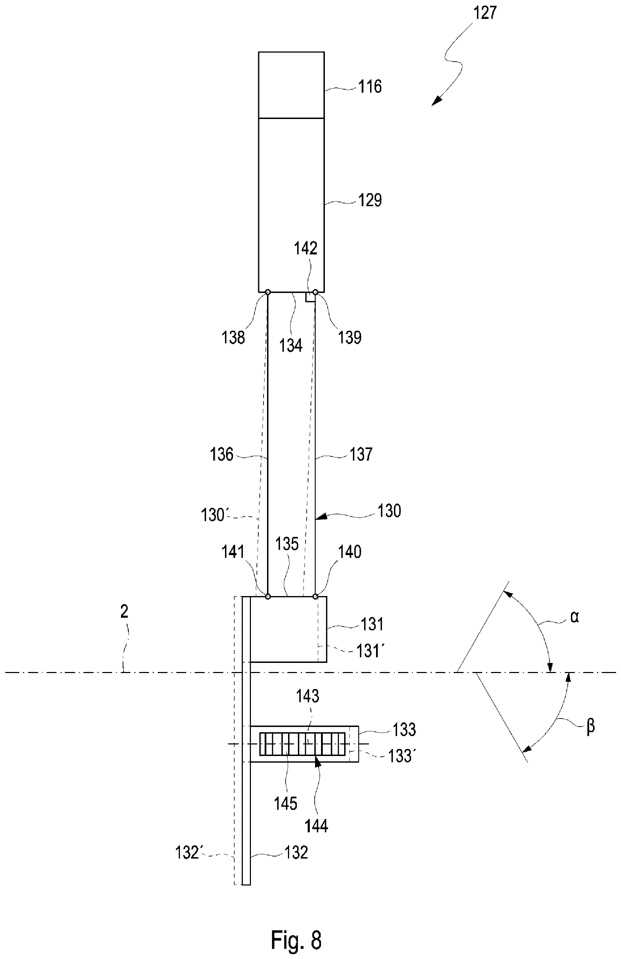

Die Fig. 8 zeigt eine Aufsicht einer Ausführungsform eines wie zuvor erwähnten Viergelenkauslegers 127.

Der Viergelenkausleger 127 kann einen Träger 129 aufweisen, der mit dem Spulenturm 116 oder dem Schiebestück 117 verbunden ist. An dem Träger 129 ist dem Spulenturm 116 abgewandt ein Querviergelenk 130 montiert. Das Querviergelenk 130 trägt einen Wickelkopf 131 zum Wickeln der Wärmeübertragerrohre 5, 5A, 5B, 5C auf das Kernrohr 6 oder auf das teilweise gewickelte Rohrbündel 4'. Der Wickelkopf 131 wiederum trägt einen weiteren Träger 132, an dem endseitig eine Sortiereinheit 133 angebracht ist.

Der Träger 132 ragt über die Sortiereinheit 133 hinaus und kann von einem Bediener der Wickelanlage 100 von der Arbeitsbühne 106 aus gegriffen werden, um den Viergelenkausleger 127 manuell zu führen. Hierzu kann endseitig an dem Träger 132 ein Handgriff angebracht sein. Ferner kann endseitig an dem Träger 132 auch ein Bedienelement, beispielsweise in Form eines Berührbildschirms, zum Bedienen der Bedien- und Steuereinheit 128 und damit der Wickelanlage 100 angebracht sein.

Das Querviergelenk 130 umfasst zwei kurze Schenkel 134, 135 und zwei lange Schenkel 136, 137, die an Gelenkpunkten 138, 139, 140, 141 gelenkig miteinander verbunden sind, so dass das Querviergelenk 130 von einem in der Fig. 8 mit durchgezogenen Linien dargestellten unausgelenkten Zustand, der mit dem Bezugszeichen 130 versehen ist, in der Orientierung der Fig. 8 nach links oder rechts in einen mit gestrichelten Linien dargestellten ausgelenkten Zustand, der mit dem Bezugszeichen 130' versehen ist, und umgekehrt verbracht werden kann. Hierbei wird der Wickelkopf 131 mitsamt dem Träger 132 und der Sortiereinheit 133 mitverschwenkt, wie in der Fig. 8 mit Hilfe von gestrichelten Linien und den Bezugszeichen 131', 132', 133' angedeutet ist.

Das Querviergelenk 130 umfasst ferner einen Drehgeber 142, der an einem der Gelenkpunkte 138, 139, 140, 141 angebracht ist, um eine Auslenkung, insbesondere einen Auslenkungswinkel, des Querviergelenks 130 zu erfassen. Sensordaten des Drehgebers 142 werden der Bedien- und Steuereinheit 128 zur Verfügung gestellt. Das Querviergelenk 130 ist mit Hilfe des kurzen Schenkels 134 mit dem Träger 129 verbunden. Der Wickelkopf 131 ist an dem kurzen Schenkel 135 montiert. Der Aufbau des Wickelkopfs 131 wird nachfolgend noch erläutert. Der Wickelkopf 131 dient dazu, die Wärmeübertragerrohre 5, 5A, 5B, 5C mit Vorspannung und in einem geeigneten Abstand voneinander auf die Stege 8, 8A, 8B aufzuwickeln.

Die Sortiereinheit 133 sorgt dafür, dass die Wärmeübertragerrohre 5, 5A, 5B, 5C korrekt in die Ausnehmungen 24 der Stege 8, 8A, 8B gewickelt werden. Hierzu weist die Sortiereinheit 133 eine um eine Drehachse 143 drehbare Führungsrolle 144 auf. Die Führungsrolle 144 weist eine Vielzahl von um die Drehachse 143 umlaufenden Führungsnuten 145 auf, von denen in der Fig. 8 nur eine mit einem Bezugszeichen versehen ist. Eine Anzahl der Führungsnuten 145 ist beliebig. Beispielsweise ist im Betrieb der Wickelanlage 100 in jeder zweiten Führungsnut 145 ein Wärmeübertragerrohr 5, 5A, 5B, 5C aufgenommen.

Der Träger 132 kann ein Gelenk aufweisen, so dass der Träger 132 zumindest abschnittsweise so verschwenkt werden kann, dass der Träger 132 das Kernrohr 6 oder das teilweise gewickelte Rohrbündel 4' zumindest abschnittsweise umgreift und die Führungsrolle 144 die Wärmeübertragerrohre 5, 5A, 5B, 5C richtig positionieren kann.

Mit Hilfe des Viergelenkauslegers 127 können die Wärmeübertragerrohre 5, 5A, 5B, 5C in einem Wickelwinkel α, β schräg zu der Mittelachse 2 gewickelt werden. Beispielsweise wird die Rohrlage 7A mit einem ersten Wickelwinkel α und die Rohrlage 7B mit einem zweiten Wickelwinkel β gewickelt. Dabei sind die Wickelwinkel α, β der unterschiedlichen Rohrlagen 7A, 7B betragsgleich, weisen jedoch unterschiedliche Vorzeichen auf. Die Wickelwinkel α, β sind kleiner als 90°. Beispielsweise betragen die Wickelwinkel α, β jeweils 60 bis 80°.

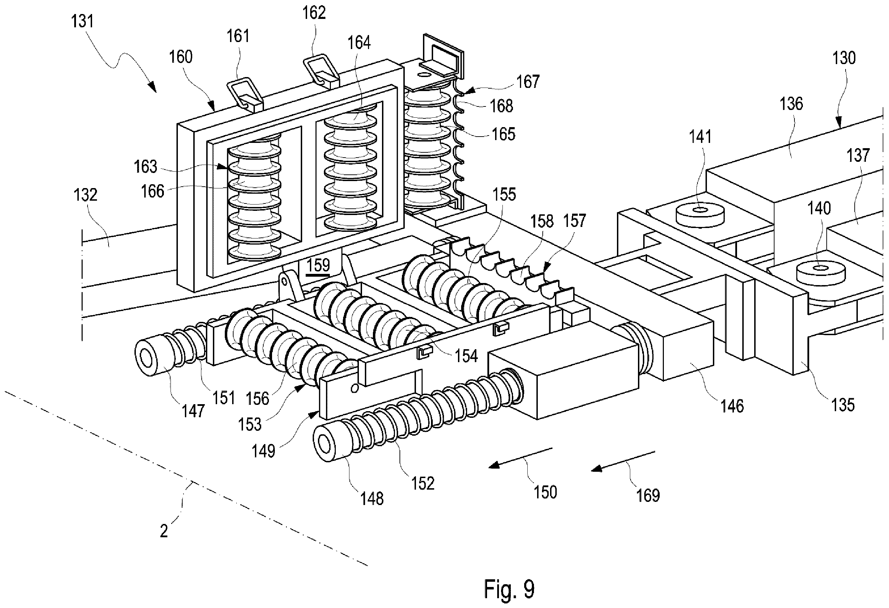

Die Fig. 9 zeigt eine schematische perspektivische Ansicht einer Ausführungsform eines wie zuvor erwähnten Wickelkopfs 131.

Der Wickelkopf 131 umfasst einen Basiskörper 146, der mit dem kurzen Schenkel 135 des Querviergelenks 130 verbunden ist. An dem Basiskörper 146 ist der Träger 132 mit der Sortiereinheit 133 befestigt. An dem Basiskörper 146 sind zwei stangenförmige Führungselemente 147, 148 montiert. An den Führungselementen 147, 148 ist ein Wickelkopfunterteil 149 linear verschieblich gelagert, wie in der Fig. 9 mit Hilfe eines Pfeils 150 angedeutet ist.

Das Wickelkopfunterteil 149 ist mit Hilfe zweier Federelemente 151, 152 gegen den Basiskörper 146 federvorgespannt und kann in Richtung des Pfeils 150 gegen eine Federkraft der Federelemente 151, 152 von dem Basiskörper 146 wegebewegt werden. Die Federelemente 151, 152 sind auf die Führungselemente 147, 148 aufgeschoben. Mit Hilfe der Federelemente 151, 152 kann eine Vorspannkraft auf die zu wickelnden Wärmeübertragerrohre 5, 5A, 5B, 5C aufgebracht werden. Beidseits des Wickelkopfunterteils 149 sind jeweils ein Führungselement 147, 148 sowie ein Federelement 151, 152 angeordnet.

In oder an dem Wickelkopfunterteil 149 sind mehrere untere Führungsrollen 153, 154, 155 zum Führen der Wärmeübertragerrohre 5, 5A, 5B, 5C drehbar gelagert. Jede untere Führungsrolle 153, 154, 155 weist eine Vielzahl von Führungsnuten 156 auf, von denen in der Fig. 9 nur eine mit einem Bezugszeichen versehen ist. In den Führungsnuten 156 sind im Betrieb des Wickelkopfs 131 die Wärmeübertragerrohre 5, 5A, 5B, 5C geführt. Eine Anzahl der Führungsnuten 156 ist beliebig. Beispielsweise ist im Betrieb des Wickelkopfs 131 nur jede zweite Führungsnut 156 mit einem Wärmeübertragerrohr 5, 5A, 5B, 5C belegt. Die Führungsnuten 156 sind derart beabstandet voneinander angeordnet, dass beispielsweise die ersten Wärmeübertragerrohre 5A, 5B jeweils mit der Lücke 36 beabstandet voneinander auf das Kernrohr 6 oder auf das teilweise gewickelte Rohrbündel 4' aufgewickelt werden können.

An dem Wickelkopfunterteil 149 ist ferner ein feststehendes unteres Führungselement 157 montiert, welches eine Vielzahl von Führungsnuten 158 aufweist, von denen in der Fig. 9 nur eine mit einem Bezugszeichen versehen ist. Eine Anzahl der Führungsnuten 158 des unteren Führungselements 157 entspricht der Anzahl der Führungsnuten 156 der unteren Führungsrollen 153, 154, 155. Mit Hilfe des unteren Führungselements 157 werden die Wärmeübertragerrohre 5, 5A, 5B, 5C in Richtung des Pfeils 150 den unteren Führungsrollen 153, 154, 155 zugeführt.

Mit dem Wickelkopfunterteil 149 ist mit Hilfe eines Scharniers 159 ein Wickelkopfoberteil 160 verschwenkbar verbunden. Mit Hilfe des Scharniers 159 kann der Wickelkopf 131 demgemäß von einem in der Fig. 9 gezeigten geöffneten Zustand in einen geschlossenen Zustand und umgekehrt verbracht werden. Mit Hilfe von Verschlüssen 161, 162 können das Wickelkopfunterteil 149 und das Wickelkopfoberteil 160 in dem geschlossenen Zustand aneinander verriegelt werden.

In oder an dem Wickelkopfoberteil 160 sind mehrere obere Führungsrollen 163, 164, 165 zum Führen der Wärmeübertragerrohre 5, 5A, 5B, 5C drehbar gelagert. Jede obere Führungsrolle 163, 164, 165 weist eine Vielzahl von Führungsnuten 166 auf, von denen in der Fig. 9 nur eine mit einem Bezugszeichen versehen ist. Die oberen Führungsrollen 163, 164, 165 des Wickelkopfoberteils 160 und die unteren Führungsrollen 153, 154, 155 des Wickelkopfunterteils 149 sind versetzt zueinander angeordnet, so dass immer eine obere Führungsrolle 163, 164, 165 des Wickelkopfoberteils 160 zwischen zwei unteren Führungsrollen 153, 154, 155 des Wickelkopfunterteils 149 und umgekehrt angeordnet ist. Im Betrieb des Wickelkopfs 131 sind die Wärmeübertragerrohre 5, 5A, 5B, 5C zwischen den oberen Führungsrollen 163, 164, 165 des Wickelkopfoberteils 160 und den unteren Führungsrollen 153, 154, 155 des Wickelkopfunterteils 149 platziert, insbesondere geklemmt.

In den Führungsnuten 166 sind somit im Betrieb des Wickelkopfs 131 die Wärmeübertragerrohre 5, 5A, 5B, 5C geführt. Eine Anzahl der Führungsnuten 166 ist beliebig. Die Anzahl der Führungsnuten 166 entspricht jedoch der Anzahl der Führungsnuten 156. Beispielsweise ist im Betrieb des Wickelkopfs 131 nur jede zweite Führungsnut 166 mit einem Wärmeübertragerrohr 5, 5A, 5B, 5C belegt. Die Führungsnuten 166 sind derart beabstandet voneinander angeordnet, dass beispielsweise die ersten Wärmeübertragerrohre 5A, 5B jeweils mit der Lücke 36 beabstandet voneinander auf das Kernrohr 6 oder auf das teilweise gewickelte Rohrbündel 4' aufgewickelt werden können. Mit anderen Worten ordnet der Wickelkopf 131 die ersten Wärmeübertragerrohre 5A, 5B derart an, dass zwischen zwei benachbarten ersten Wärmeübertragerrohre 5A, 5B immer eine Lücke 36 angeordnet ist. Entsprechendes gilt für die zweiten Wärmeübertragerrohre 5C.

An dem Wickelkopfoberteil 160 ist ferner ein feststehendes oberes Führungselement 167 montiert, welches eine Vielzahl von Führungsnuten 168 aufweist, von denen in der Fig. 9 nur eine mit einem Bezugszeichen versehen ist. Eine Anzahl der Führungsnuten 168 des oberen Führungselements 167 entspricht der Anzahl der Führungsnuten 166 der oberen Führungsrollen 163, 164, 165. Mit Hilfe der beiden Führungselemente 157, 167 werden die Wärmeübertragerrohre 5, 5A, 5B, 5C in Richtung des Pfeils 150 den Führungsrollen 153, 154, 155, 163, 164, 165 zugeführt.

Die Funktionsweise der Wickelanlage 100 wird nachfolgend zusammenfassend mit Bezug auf die beispielhaft in der Fig. 3 gezeigten Rohrlagen 7A, 7B erläutert. In der Behälterdrehvorrichtung 101 liegt das Kernrohr 6 oder das teilweise gewickelte Rohrbündel 4'. In den Rohrtrommeln 120, 121, 122, 123 der Wickelvorrichtung 107 sind Coils der Wärmeübertragerrohre 5, 5A, 5B, 5C aufgenommen. Das Kernrohr 6 oder das teilweise gewickelte Rohrbündel 4' ist außenseitig mit einer Vielzahl von aufgeschweißten Stegen 8A versehen.

Um nun die Rohrlage 7A zu beginnen, wird ein als Führungsrohr fungierendes Wärmeübertragerrohr 5 von einer der Rohrtrommeln 120, 121, 122, 123 abgezogen und an einem der Rohrböden 42, 43 der Einlassstutzen 13, 14, 15 (Fig. 1) oder der Auslassstutzen 16, 17, 18 befestigt, um ein Abziehen des als Führungsrohr fungierendes Wärmeübertragerrohr 5 von dem Kernrohr 6 oder dem teilweise gewickelten Rohrbündel 4' zu verhindern. Anschließend wird das als Führungsrohr fungierende Wärmeübertragerrohr 5 in einem gewünschten Wickelwinkel α (Fig. 8) manuell auf die Stege 8A gewickelt, wobei das als Führungsrohr fungierende Wärmeübertragerrohr 5 in den Ausnehmungen 24 der Stege 8A zum Liegen kommt. Das als Führungsrohr fungierende Wärmeübertragerrohr 5 wird mit je einem ersten Befestigungsbügel 26 an jedem Steg 8A befestigt.

Darunter, dass das als Führungsrohr fungierende Wärmeübertragerrohr 5 "manuell gewickelt" wird, ist vorliegend zu verstehen, dass der Bediener der Wickelanlage 100 mit Hilfe der Bedien- und Steuereinheit 128, insbesondere mit Hilfe des zuvor erwähnten Bedienelements der Bedien- und Steuereinheit 128, eine Winkelgeschwindigkeit oder Rotationsgeschwindigkeit der Behälterdrehvorrichtung 101, mit der sich das Kernrohr 6 oder das teilweise gewickelte Rohrbündel 4' um die Mittelachse 2 dreht und eine Verfahrgeschwindigkeit des Spulenwagens 110 entlang der Laufschienen 108, 109 manuell steuert, um den gewünschten Wickelwinkel α zu erzielen.

Der Viergelenkausleger 127 mit dem Wickelkopf 131 und der Sortiereinheit 133 wird bei dem manuellen Wickeln von dem Bediener von Hand geführt. Hierzu kann der Bediener von der Arbeitsbühne 106 aus den Viergelenkausleger 127 an dem Träger 132 greifen. Vor dem manuellen Wickeln können diejenigen Ausnehmungen 24 markiert werden, in die das als Führungsrohr fungierende Wärmeübertragerrohr 5 eingelegt werden muss, um den gewünschten Wickelwinkel α zu erreichen.

Ist das als Führungsrohr fungierende Wärmeübertragerrohr 5 über eine gesamte Länge des Kernrohrs 6 oder das teilweise gewickelte Rohrbündel 4' in dem gewünschten Wickelwinkel α auf die Stege 8A gewickelt und mit Hilfe einer Vielzahl von ersten Befestigungsbügeln 26 mit den Stegen 8A verbunden, wird das als Führungsrohr fungierende Wärmeübertragerrohr 5 abgelängt und mit einem der Rohrböden 42, 43 der Einlassstutzen 13, 14, 15 oder der Auslassstutzen 16, 17, 18 verbunden. Anschließend kann der eigentliche Wickelvorgang der Rohrlage 7A mit den ersten Wärmeübertragerrohren 5A, 5B und den zweiten Wärmeübertragerrohren 5C beginnen.

Zum Wickeln der Rohrlage 7A werden dem Wickelkopf 131 von vier Rohrtrommeln 120, 121, 122, 123 aus vier erste Wärmeübertragerrohre 5A, 5B zugeführt, die mit Hilfe des Wickelkopfs 131 derart in einem Abstand voneinander gehalten werden, dass zwischen zwei ersten Wärmeübertragerrohren 5A, 5B jeweils ein zweites Wärmeübertragerrohr 5C einfügbar ist. Vor dem Wickelvorgang werden die ersten Wärmeübertragerrohre 5A, 5B mit einem der Rohrböden 42, 43 der Einlassstutzen 13, 14, 15 oder der Auslassstutzen 16, 17, 18 verbunden. Sämtliche ersten Wärmeübertragerrohre 5A, 5B werden zeitgleich gewickelt.

Die ersten Wärmeübertragerrohre 5A, 5B werden mit Hilfe von ersten Befestigungsbügeln 26 an einem der Stege 8A befestigt. Dabei liegt eines der ersten Wärmeübertragerrohre 5A, 5B an dem als Führungsrohr fungierenden Wärmeübertragerrohr 5 an und wird während des Wickelvorgangs von diesem geführt. Das erste Wärmeübertragerrohr 5A, 5B, das an dem als Führungsrohr fungierenden Wärmeübertragerrohr 5 anliegt, wird mit modifizierten Befestigungsbügeln (nicht gezeigt) an den Stegen 8A befestigt, wobei diese modifizierten Befestigungsbügel auf einer Seite mit den Stegen 8A und auf der anderen Seite mit einem der ersten Befestigungsbereiche 30, 31 der ersten Befestigungsbügel 26 des als Führungsrohr fungierenden Wärmeübertragerrohr 5 verbunden, insbesondere verschweißt, werden.

Das Kernrohr 6 oder das teilweise gewickelte Rohrbündel 4' wird mit Hilfe der Behälterdrehvorrichtung 101 um die Mittelachse 2 in Rotation versetzt. Hierdurch werden die ersten Wärmeübertragerrohre 5A, 5B von den Rohrtrommeln 120, 121, 122, 123, die mit Hilfe der Bremsen 124, 125 ständig abgebremst werden können, abgezogen. Die Bremsen 124, 125 verhindern ein unerwünschtes Nachlaufen der ersten Wärmeübertragerrohre 5A, 5B. Die Bremsen 124, 125 können mit Hilfe der Bedien- und Steuereinheit 128 geregelt werden.

Die Geraderichteinheit 126 richtet die ersten Wärmeübertragerrohre 5A, 5B gerade, bevor diese dem Wickelkopf 131 zugeführt werden, welcher die ersten Wärmeübertragerrohre 5A, 5B so voneinander beabstandet, dass diese mit Hilfe der Sortiereinheit 133 in die Ausnehmungen 24 der Stege 8A einsortiert werden können. Der Wickelkopf 131 hält die ersten Wärmeübertragerrohre 5A, 5B mit Hilfe der Federelemente 151, 152 auf Vorspannung, wobei die ersten Wärmeübertragerrohre 5A, 5B in einer Abzugsrichtung 169 aus dem Wickelkopf 131 herausgezogen werden. Die Abzugsrichtung 169 ist von dem Wickelkopf 131 in Richtung der Mittelachse 2 orientiert.

Gleichzeitig mit dem Beginn des Drehens des Kernrohrs 6 oder des teilweise gewickelten Rohrbündels 4' verfährt der Spulenwagen 110 entlang der Laufschienen 108, 109. Die Verfahrgeschwindigkeit des Spulenwagens 110 ist zum einen abhängig von der Winkelgeschwindigkeit des Kernrohrs 6 oder des teilweise gewickelten Rohrbündels 4' und zum anderen von dem durch das als Führungsrohr fungierenden Wärmeübertragerrohr 5 vorgegebenen Wickelwinkel α.

Die Verfahrgeschwindigkeit des Spulenwagens 110 kann mit Hilfe des Drehgebers 114 erfasst werden, wobei die Winkelgeschwindigkeit des Kernrohrs 6 oder des teilweise gewickelten Rohrbündels 4' mit Hilfe des Drehgebers 103 erfasst werden kann. Als Führungsgröße für die Verfahrgeschwindigkeit des Spulenwagens 110 kann entweder die Winkelgeschwindigkeit des Kernrohrs 6 oder des teilweise gewickelten Rohrbündels 4' oder die Auslenkung des Querviergelenks 130 herangezogen werden. Das Querviergelenk 130 ermöglicht es, Toleranzabweichungen an den Stegen 8A, insbesondere hinsichtlich der Positionierung der Ausnehmungen 24 an den Stegen 8A, sowie Geschwindigkeitsabweichungen des Spulenwagens 110 auszugleichen.

Das Querviergelenk 130 ermöglicht ferner einen Ausgleich von Steigungs- und/oder Positionsfehlern der ersten Wärmeübertragerrohre 5A, 5B während des Wickelvorgangs. Je nachdem, wie weit und in welche Richtung das Querviergelenk 130 ausgelenkt wird, was mit Hilfe des Drehgebers 142 erfasst wird, wird die Winkelgeschwindigkeit des Kernrohrs 6 oder des teilweise gewickelten Rohrbündels 4' und/oder die Verfahrgeschwindigkeit des Spulenwagens 110 derart angepasst, dass die ersten Wärmeübertragerrohre 5A, 5B in den ihnen zugeordneten Ausnehmungen 24 zum Liegen kommen und immer ein Kontakt eines der ersten Wärmeübertragerrohre 5A, 5B mit dem als Führungsrohr fungierenden Wärmeübertragerrohr 5 gewährleistet ist.

Während des Wickelvorgangs der ersten Wärmeübertragerrohre 5A, 5B kann der Bediener den Viergelenkausleger 127 mit dem Wickelkopf 131 und der Sortiereinheit 133 von der Arbeitsbühne 106 aus kontrollieren und gegebenenfalls Korrekturen vornehmen.

Sind die ersten Wärmeübertragerrohre 5A, 5B über die gesamte Länge des Kernrohrs 6 oder das teilweise gewickelte Rohrbündel 4' in dem gewünschten Wickelwinkel α auf die Stege 8A gewickelt und mit Hilfe einer Vielzahl von ersten Befestigungsbügeln 26 mit den Stegen 8A verbunden, werden die ersten Wärmeübertragerrohre 5A, 5B abgelängt und mit den Rohrböden 42, 43 der Einlassstutzen 13, 14, 15 oder der Auslassstutzen 16, 17, 18 verbunden.

Die ersten Wärmeübertragerrohre 5A, 5B sind jetzt derart an den Stegen 8A fixiert, dass immer zwischen zwei ersten Wärmeübertragerrohren 5A, 5B eine wie zuvor erläuterte Lücke 36 (Fig. 3) für ein zweites Wärmeübertragerrohr 5C angeordnet ist. Nur zwischen dem ersten Wärmeübertragerrohr 5A, 5B, das an dem als Führungsrohr fungierenden Wärmeübertragerrohr 5 anliegt, und dem als Führungsrohr fungierenden Wärmeübertragerrohr 5 ist keine derartige Lücke 36 vorgesehen. Dadurch, dass die ersten Befestigungsbügel 26 direkt mit den Stegen 8A verbunden sind, wird eine hohe Festigkeit des fertigen Rohrbündels 4 erzielt.

Anschließend werden beispielsweise vier zweite Wärmeübertragerrohre 5C zeitgleich gewickelt, wobei diese in den Lücken 36 zwischen den ersten Wärmeübertragerrohren 5A, 5B abgelegt und auch an diesen geführt werden. Der Wickelvorgang an sich wird analog zu dem zuvor erwähnten Wickelvorgang betreffend die ersten Wärmeübertragerrohre 5A, 5B durchgeführt. Die zweiten Wärmeübertragerrohre 5C werden mit Hilfe einer Vielzahl zweiter Befestigungsbügel 39 (Fig. 3), die mit den ersten Befestigungsbereichen 30, 31 der ersten Befestigungsbügel 26 verbunden, insbesondere verschweißt, werden, fixiert. Anschließend werden die zweiten Wärmeübertragerrohre 5C abgelängt und mit den Rohrböden 42, 43 der Einlassstutzen 13, 14, 15 oder der Auslassstutzen 16, 17, 18 verbunden. Die Rohrlage 7A ist fertiggestellt.

Um die nächste Rohrlage 7B zu beginnen, wird zunächst eine Vielzahl von Stegen 8B mit den ersten Befestigungsbügeln 26 verbunden. Hierzu werden die Stege 8B mit den zweiten Befestigungsbereichen 32, 33 der ersten Befestigungsbügel 26 verschweißt. Die Stege 8B dienen dabei als Abstandhalter zwischen den Rohrlagen 7A, 7B. Anschließend kann die Rohrlage 7B - wie zuvor mit Bezug auf die Rohrlage 7A erläutert - gewickelt werden. Im Unterschied zu der Rohrlage 7A wird die Rohrlage 7B jedoch in dem zu dem Wickelwinkel α entgegengesetzten Wickelwinkel β gewickelt. Die Rohrlagen 7A, 7B werden somit mit unterschiedlichen Steigungen gewickelt.

Der Wickelvorgang wird so lange mit sich abwechselnden Rohrlagen 7A, 7B durchgeführt, bis das Rohrbündel 4 fertiggestellt ist. Anschließend werden das Hemd 19 (Fig. 1) und der Mantel 9, die Einlassstutzen 13, 14, 15 sowie die Auslassstutzen 16, 17, 18 montiert, wobei die Wärmeübertragerrohre 5, 5A, 5B, 5C insbesondere fluidisch mit den Einlassstutzen 13, 14, 15 und den Auslassstutzen 16, 17, 18 verbunden werden. Aufgrund des jeweils zeitgleichen Wickelns mehrerer erster Wärmeübertragerrohre 5A, 5B sowie mehrerer zweiter Wärmeübertragerrohre 5C lässt sich bei dem Wickeln des Rohrbündels 4 eine signifikante Zeitersparnis erzielen.

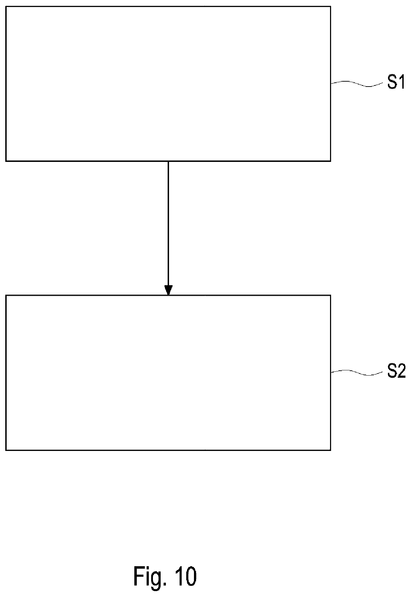

Die Fig. 10 zeigt ein schematisches Blockdiagramm einer Ausführungsform eines Verfahrens zum Wickeln des Rohrbündels 4.

Das Verfahren wird mit Hilfe der Wickelanlage 100 durchgeführt. Mit Hilfe des Verfahrens wird der zuvor erläuterte Wickelvorgang durchgeführt. Das Verfahren weist einen ersten Schritt S1 sowie einen zweiten Schritt S2 auf. Die beiden Schritte S1, S2 werden zeitlich aufeinanderfolgend durchgeführt. Das heißt insbesondere, dass der erste Schritt S1 vor dem zweiten Schritt S2 und der zweite Schritt S2 nach dem ersten Schritt S1 durchgeführt wird.

Bei dem ersten Schritt S1 werden zumindest zwei erste Wärmeübertragerrohre 5A, 5B auf das Kernrohr 6 oder auf das teilweise gewickelte Rohrbündel 4' derart zeitgleich gewickelt, dass zwischen jeweils zwei ersten Wärmeübertragerrohren 5A, 5B eine Lücke 36 gebildet wird. Sind die ersten Wärmeübertragerrohre 5A, 5B über die gesamte Länge des Kernrohrs 6 oder des teilweise gewickelten Rohrbündels 4' gewickelt, wird anschließend der zweite Schritt S2 durchgeführt. Bei dem zweiten Schritt S2 werden zumindest zwei zweite Wärmeübertragerrohre 5C auf das Kernrohr 6 oder auf das teilweise gewickelte Rohrbündel 4' derart zeitgleich gewickelt, dass jeweils eines der zweiten Wärmeübertragerrohre 5C in der Lücke 36 angeordnet wird.

Insbesondere können vor dem ersten Schritt S1 an dem Kernrohr 6 oder an dem teilweise gewickelten Rohrbündel 4' Stege 8, 8A, 8B angebracht werden, auf die während des ersten Schritts S1 die ersten Wärmeübertragerrohre 5A, 5B und während des zweiten Schritts S2 die zweiten Wärmeübertragerrohre 5C gewickelt werden. Dabei weisen die Stege 8, 8A, 8B wie zuvor erwähnte Ausnehmungen 24 auf, in die während des ersten Schritts S1 die ersten Wärmeübertragerrohre 5a, 5B und während des zweiten Schritts S2 die zweiten Wärmeübertragerrohre 5C gewickelt werden.

Die ersten Wärmeübertragerrohre 5A, 5B und die zweiten Wärmeübertragerrohre 5C bilden zusammen eine wie zuvor erwähnte Rohrlage 7, 7A, 7B des Rohrbündels 4, wobei das Rohrbündel 4 von mehreren Rohrlagen 7, 7A, 7B gebildet wird, und wobei benachbarte Rohrlagen 7, 7A, 7B mit sich voneinander unterscheidenden Wickelwinkeln α, β gewickelt werden. Die Stege 8, 8A, 8B werden dabei auch zwischen den benachbarten Rohrlagen 7, 7A, 7B angeordnet.

Während des ersten Schritts S1 werden die ersten Wärmeübertragerrohre 5A, 5B mit Hilfe der ersten Befestigungsbügel 26 mit den Stegen 8, 8A, 8B verbunden. Anschließend werden während des zweiten Schritts S2 die zweiten Wärmeübertragerrohre 5C mit Hilfe der zweiten Befestigungsbügel 39 mit den ersten Befestigungsbügeln 26 verbunden.

Vor dem ersten Schritt S1 kann ein als Führungsrohr fungierendes Wärmeübertragerrohr 5 auf das Kernrohr 6 oder auf das teilweise gewickelte Rohrbündel 4' gewickelt werden, wobei eines der ersten Wärmeübertragerrohre 5A, 5B während des ersten Schritts S1 an dem als Führungsrohr fungierenden Wärmeübertragerrohr 5 geführt wird. Wie zuvor erwähnt, wird das als Führungsrohr fungierende Wärmeübertragerrohr 5 manuell gewickelt. Hierzu können Ausnehmungen 24 der Stege 8, 8A, 8B, in denen das als Führungsrohr fungierende Wärmeübertragerrohr 5 abgelegt wird, vorab markiert werden. Hierdurch kann der gewünschte Wickelwinkel α, β einfach erzielt werden.

Mit Hilfe des Wickelkopfs 131 werden die ersten Wärmeübertragerrohre 5A, 5B während des ersten Schritts S1 und die zweiten Wärmeübertragerrohre 5C während des zweiten Schritts S2 jeweils unter Vorspannung auf das Kernrohr 6 oder auf das teilweise gewickelte Rohrbündel 4' gewickelt.

Die ersten Wärmeübertragerrohre 5A, 5B werden während des ersten Schritts S1 und die zweiten Wärmeübertragerrohre 5C werden während des zweiten Schritts S2 von den Rohrtrommeln 120, 121, 122, 123 abgewickelt, wobei die ersten Wärmeübertragerrohre 5A, 5B und die zweiten Wärmeübertragerrohre 5C vor dem jeweiligen zeitgleichen Wickeln auf das Kernrohr 6 oder auf das teilweise gewickelte Rohrbündel 4' geradegerichtet werden. Hierzu wird die Geraderichteinheit 126 eingesetzt. Während des ersten Schritts S1 und/oder während des zweiten Schritts S2 können die Rohrtrommeln 120, 121, 122, 123 kontinuierlich abgebremst werden. Hierzu können die Bremsen 124, 125 entsprechend geregelt werden.

Während der Schritte S1, S2 kann die Winkelgeschwindigkeit der Behälterdrehvorrichtung 101 um die Mittelachse 2 und/oder die Verfahrgeschwindigkeit der Wickelvorrichtung 107, insbesondere des Spulenwagens 110, entlang der Mittelachse 2 basierend auf den Sensordaten des Querviergelenks 130, 130', insbesondere des Drehgebers 142, angepasst werden.

Während des ersten Schritts S1 können die ersten Wärmeübertragerrohre 5A, 5B und während des zweiten Schritts S2 können die zweiten Wärmeübertragerrohre 5C mit Hilfe der Sortiereinheit 133 auf dem Kernrohr 6 oder auf dem teilweise gewickelten Rohrbündel 4' abgelegt werden.

Obwohl die vorliegende Erfindung anhand von Ausführungsbeispielen beschrieben wurde, ist sie vielfältig modifizierbar.

### Verwendete Bezugszeichen

- 1: Wärmeübertrager
- 2: Mittelachse
- 3: Radialrichtung
- 4: Rohrbündel
- 4': Rohrbündel
- 5: Wärmeübertragerrohr
- 5A: Wärmeübertragerrohr
- 5B: Wärmeübertragerrohr
- 5C: Wärmeübertragerrohr
- 6: Kernrohr
- 7: Rohrlage
- 7A: Rohrlage
- 7B: Rohrlage
- 8: Steg
- 8A: Steg
- 8B: Steg
- 9: Mantel
- 10: Mantelraum
- 11: Einlassstutzen
- 12: Auslassstutzen
- 13: Einlassstutzen
- 14: Einlassstutzen
- 15: Einlassstutzen
- 16: Auslassstutzen
- 17: Auslassstutzen
- 18: Auslassstutzen
- 19: Hemd
- 20: Schenkel
- 21: Schenkel
- 22: Kontaktfläche
- 23: Kontaktfläche
- 24: Ausnehmung
- 25: Außenfläche
- 26: Befestigungsbügel
- 27: Umgreifabschnitt
- 28: Befestigungsabschnitt
- 29: Befestigungsabschnitt
- 30: Befestigungsbereich
- 31: Befestigungsbereich
- 32: Befestigungsbereich
- 33: Befestigungsbereich
- 34: Mittelachse
- 35: Umfangsrichtung
- 36: Lücke
- 37: Schweißpunkt
- 38: Schweißpunkt
- 39: Befestigungsbügel
- 40: Schweißpunkt
- 41: Schweißpunkt
- 42: Rohrboden
- 43: Rohrboden
- 100: Wickelanlage
- 101: Behälterdrehvorrichtung
- 102: Doppelpfeil
- 103: Drehgeber
- 104: Ablaufsicherung
- 105: Arbeitsbühne
- 106: Arbeitsbühne
- 107: Wickelvorrichtung
- 108: Laufschiene
- 109: Laufschiene
- 110: Spulenwagen
- 111: Antrieb
- 112: Doppelpfeil
- 113: Hallenboden
- 114: Drehgeber
- 115: Drehkranz
- 116: Spulenturm
- 117: Schiebestück
- 118: Ausleger
- 119: Ausleger
- 120: Rohrtrommel
- 121: Rohrtrommel
- 122: Rohrtrommel
- 123: Rohrtrommel
- 124: Bremse
- 125: Bremse
- 126: Geraderichteinheit
- 127: Viergelenkausleger
- 128: Bedien- und Steuereinheit
- 129: Träger
- 130: Querviergelenk
- 130': Querviergelenk
- 131: Wickelkopf
- 131': Wickelkopf
- 132: Träger
- 132': Träger
- 133: Sortiereinheit
- 133': Sortiereinheit
- 134: Schenkel
- 135: Schenkel
- 136: Schenkel
- 137: Schenkel
- 138: Gelenkpunkt
- 139: Gelenkpunkt
- 140: Gelenkpunkt
- 141: Gelenkpunkt
- 142: Drehgeber
- 143: Drehachse
- 144: Führungsrolle
- 145: Führungsnut
- 146: Basiskörper
- 147: Führungselement
- 148: Führungselement
- 149: Wickelkopfunterteil
- 150: Pfeil
- 151: Federelement
- 152: Federelement
- 153: Führungsrolle
- 154: Führungsrolle
- 155: Führungsrolle
- 156: Führungsnut
- 157: Führungselement
- 158: Führungsnut
- 159: Scharnier
- 160: Wickelkopfoberteil
- 161: Verschluss
- 162: Verschluss
- 163: Führungsrolle
- 164: Führungsrolle
- 165: Führungsrolle
- 166: Führungsnut
- 167: Führungselement
- 168: Führungsnut
- 169: Abzugsrichtung

- M1: Medium
- M2: Medium
- S1: Schritt
- S2: Schritt
- α: Wickelwinkel
- β: Wickelwinkel

## Patentansprüche

1. Wickelanlage (100) zum Wickeln eines Rohrbündels (4) eines gewickelten Wärmeübertragers (1), mit einer Behälterdrehvorrichtung (101) zum Drehen eines Kernrohrs (6) oder eines bereits teilweise gewickelten Rohrbündels (4') um eine Mittelachse (2) desselben, und einer Wickelvorrichtung (107) zum zeitgleichen Wickeln von zumindest zwei Wärmeübertragerrohren (5, 5A, 5B, 5C) auf das Kernrohr (6) oder auf das bereits teilweise gewickelte Rohrbündel (4'), wobei die Wickelvorrichtung (107) einen Wickelkopf (131, 131') aufweist, der dazu eingerichtet ist, die Wärmeübertragerrohre (5, 5A, 5B, 5C) derart voneinander beabstandet anzuordnen, dass zwischen zwei benachbarten Wärmeübertragerrohren (5, 5A, 5B, 5C) jeweils eine Lücke (36) angeordnet ist, in der ein weiteres Wärmeübertragerrohr (5, 5A, 5B, 5C) aufnehmbar ist.

2. Wickelanlage nach Anspruch 1, wobei der Wickelkopf (131, 131') ein Wickelkopfunterteil (149) mit einer Vielzahl von unteren Führungsrollen (153, 154, 155) und ein Wickelkopfoberteil (160) mit einer Vielzahl von oberen Führungsrollen (163, 164, 165) aufweist, zwischen denen die Wärmeübertragerrohre (5, 5A, 5B, 5C) anordenbar sind.

3. Wickelanlage nach Anspruch 2, wobei die unteren Führungsrollen (153, 154, 155) und die oberen Führungsrollen (163, 164, 165) derart zueinander versetzt angeordnet sind, dass zwischen zwei unteren Führungsrollen (153, 154, 155) eine obere Führungsrolle (163, 164, 165) und umgekehrt angeordnet ist.

4. Wickelanlage nach Anspruch 2 oder 3, wobei die unteren Führungsrollen (153, 154, 155) und die oberen Führungsrollen (163, 164, 165) jeweils Führungsnuten (156, 166) zum Führen der Wärmeübertragerrohre (5, 5A, 5B, 5C) aufweisen, und wobei die Führungsnuten (156, 166) derart voneinander beabstandet angeordnet sind, dass bei dem Führen der Wärmeübertragerrohre (5, 5A, 5B, 5C) zwischen zwei benachbarten Wärmeübertragerrohren (5, 5A, 5B, 5C) jeweils eine Lücke (36) angeordnet ist, in der ein weiteres Wärmeübertragerrohr (5, 5A, 5B, 5C) aufnehmbar ist.

5. Wickelanlage nach einem der Ansprüche 2 - 4, wobei das Wickelkopfoberteil (160) mit Hilfe eines Scharniers (159) verschwenkbar an dem Wickelkopfunterteil (149) montiert ist, und wobei das Wickelkopfoberteil (160) mit Hilfe eines Verschlusses (161, 162) an dem Wickelkopfunterteil (149) arretierbar ist.

6. Wickelanlage nach einem der Ansprüche 2 - 5, wobei der Wickelkopf (131, 131') mit Hilfe eines Federelements (151, 152) dazu eingerichtet ist, die Wärmeübertragerrohre (5, 5A, 5B, 5C) bei dem Wickeln des Rohrbündels (4) gegenüber dem Kernrohr (6) oder dem bereits teilweise gewickelten Rohrbündel (4') vorzuspannen.

7. Wickelanlage nach Anspruch 6, wobei der Wickelkopf (131, 131') einen Basiskörper (146) aufweist, an dem das Wickelkopfunterteil (149) mit Hilfe eines Führungselements (147, 148) linear verschiebbar gelagert ist, und wobei das Wickelkopfunterteil (149) mit Hilfe des Federelements (151, 152) gegen den Basiskörper (146) vorgespannt ist.

8. Wickelanlage nach einem der Ansprüche 2 - 7, wobei das Wickelkopfunterteil (149) ein unteres Führungselement (157) aufweist, wobei das Wickelkopfoberteil (160) ein oberes Führungselement (167) aufweist, und wobei das untere Führungselement (157) und das obere Führungselement (167) dazu eingerichtet sind, die Wärmeübertragerrohre (5, 5A, 5B, 5C) den unteren Führungsrollen (153, 154, 155) und den oberen Führungsrollen (163, 164, 165) zuzuführen.

9. Wickelanlage nach einem der Ansprüche 1 - 8, wobei die Wickelvorrichtung (107) einen Viergelenkausleger (127) mit einem Querviergelenk (130, 130'), das den Wickelkopf (131, 131') trägt, aufweist, und wobei das Querviergelenk (130, 130') dazu eingerichtet ist, Sensordaten betreffend eine Auslenkung des Querviergelenks (130, 130') an eine Bedien- und Steuereinheit (128) der Wickelanlage (100) auszugeben.

10. Wickelanlage nach Anspruch 9, wobei die Bedien- und Steuereinheit (128) dazu eingerichtet ist, eine Winkelgeschwindigkeit der Behälterdrehvorrichtung (101) um die Mittelachse (2) und/oder eine Verfahrgeschwindigkeit der Wickelvorrichtung (107) entlang der Mittelachse (2) basierend auf den Sensordaten des Querviergelenks (130, 130') anzupassen.

11. Wickelanlage nach Anspruch 9 oder 10, wobei das Querviergelenk (130, 130') zwei kurze Schenkel (134, 135) und zwei lange Schenkel (136, 137) aufweist, wobei die kurzen Schenkel (134, 135) und die langen Schenkel (136, 137) an Gelenkpunkten (138, 139, 140, 141) drehbar miteinander verbunden sind, und wobei an einem der Gelenkpunkte (138, 139, 140, 141) ein Drehgeber (142) zum Erzeugen der Sensordaten des Querviergelenks (130, 130') angeordnet ist.

12. Wickelanlage nach einem der Ansprüche 9 - 11, wobei der Viergelenkausleger (127) eine Sortiereinheit (133, 133') zum Ablegen der Wärmeübertragerrohre (5, 5A, 5B, 5C) auf dem Kernrohr (6) oder auf dem bereits teilweise gewickelten Rohrbündel (4') aufweist, und wobei der Wickelkopf (131, 131') zwischen dem Querviergelenk (130, 130') und der Sortiereinheit (133, 133') angeordnet ist.

13. Wickelanlage nach einem der Ansprüche 1 - 12, wobei die Wickelvorrichtung (107) eine Geraderichteinheit (126) zum Geraderichten der Wärmeübertragerrohre (5, 5A, 5B, 5C) aufweist.

14. Wickelanlage nach einem der Ansprüche 1 - 13, wobei die Wickelvorrichtung (107) mehrere Rohrtrommeln (120, 121, 122, 123) für die Wärmeübertragerrohre (5, 5A, 5B, 5C) aufweist, und wobei jede Rohrtrommel (120, 121, 122, 123) eine Bremse (124, 125) zum Abbremsen der jeweiligen Rohrtrommel (120, 121, 122, 123) aufweist.

15. Wickelanlage nach Anspruch 14, wobei die Wickelvorrichtung (107) einen Spulenwagen (110), der entlang Laufschienen (108, 109) linear verfahrbar ist, und einen drehbar an dem Spulenwagen (110) gelagerten Spulenturm (116) aufweist, der die Rohrtrommeln (120, 121, 122, 123) trägt.
